# EUROPEAN PATENT APPLICATION

(11) **EP 4 769 114 A1**
(43) Date of publication of application: **01.07.2026**
(21) Application number: 24870511.3
(22) Date of filing: 18.09.2024
(51) Int. Cl.: G06F 3/147, B60R 1/00, B60R 1/02, B60R 1/04

(54) **CONTENT DISPLAY METHOD AND SYSTEM, AND VEHICLE AND ELECTRONIC DEVICE**

(30) Priority: 25.09.2023 CN 202311247687
(71) Applicant: BOE Technology Group Co., Ltd., Beijing 100015 (CN); Beijing BOE Technology Development Co., Ltd., Beijing 100176 (CN)
(72) Inventor: ZHAO, Junjie, Beijing 100176 (CN); FENG, Hongbo, Beijing 100176 (CN); ZHANG, Xiao, Beijing 100176 (CN); SU, Jing, Beijing 100176 (CN); CHEN, Shaobei, Beijing 100176 (CN)
(74) Representative: Isarpatent
(86) International application number: PCT/CN2024/119277
(87) International publication number: WO 2025/066967

(57) **Abstract**

The present application provides a content displaying method, a content displaying system, a vehicle and an electronic device, which relates to the technical field of image displaying. In order to prevent the sight line with which the driving person watches the electronic rear view mirror from being interfered, to improve the driving safety, the content displaying method according to the present application includes: detecting whether a sight line with which a driving person watches a first display screen is blocked, wherein the first display screen is located on a right side of the driving person; if it has been detected that the sight line with which the driving person watches the first display screen is blocked, determining a second display screen associated with the first display screen; and controlling the second display screen to display a content of the first display screen. By using the content displaying method according to the present application, the driving person can, when his sight line with which he watches the first display screen is blocked, watch the content of the first display screen from the second display screen, which ensures that the sight line with which the driving person watches the content of the first display screen during the driving is not interfered, and the driving person can watch the content of the first display screen without being blocked, to improve the driving safety.

## Description

### CROSS REFERENCE TO RELEVANT APPLICATIONS

The present application claims the priority of the Chinese patent application filed on September 25th, 2023 before the Chinese Patent Office with the application number of 202311247687.4 and the title of "CONTENT DISPLAY METHOD AND SYSTEM, AND VEHICLE AND ELECTRONIC DEVICE", which is incorporated herein in its entirety by reference.

### TECHNICAL FIELD

The embodiments of the present application relate to the technical field of image displaying, and particularly relate to a content displaying method, a content displaying system, a vehicle and an electronic device.

### BACKGROUND

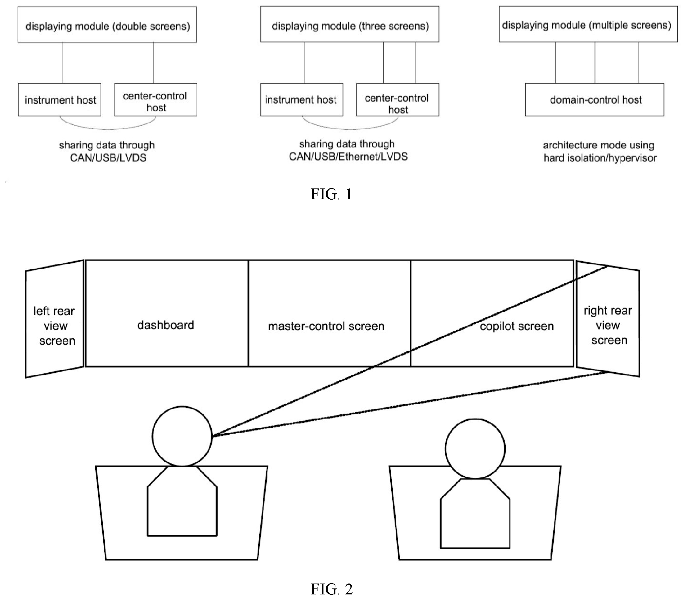

With the continuous development of cars with the trend of electronization and intellectualization, the on-board displaying has changed greatly. As shown in FIG. 1, intelligent cabins have developed from the initial double-screen displaying and three-screen displaying to the current multi-screen displaying. Currently, the multi-screen on-board displaying may comprise instrument displaying, main-control displaying, entertainment displaying, electronic-rear-view-mirror displaying, and so on. Among them, the electronic rear view mirror (Camera Monitor System, CMS) is a product that started to emerge recently. As compared with the traditional physical mirror, the electronic rear view mirror has the advantages such as a wider visual field, a smaller blind area, automatic performance of light-ray compensation, and being less influenced by the environment, and can effectively reduce the windage resistance and the wind noise, to save energy and reduce emission. Currently, the electronic rear view mirror has already been able to be used in practice.

The electronic rear view mirror comprises two parts, cameras and display screens. The rear-view-mirror display screens are located on the left side of the driving person and the right side of the copilot passenger. In the normal situation, as shown in FIG. 2, the driving person can see the real-time frames of the left and right sides of the car by using the left and right rear-view-mirror display screens (i.e., left and right rear view screens). However, in some cases, it might happen that the sight line of the driving person is blocked and the driving person cannot watch the rear-view-mirror display screens, which affects the driving safety.

Accordingly, currently, a novel content displaying method is urgently needed, to prevent the sight line with which the driving person watches the electronic rear view mirror from being interfered, to improve the driving safety.

### SUMMARY

The embodiments of the present application provide a content displaying method, a content displaying system, a vehicle and an electronic device, to at least partially solve the problems in the related art.

The first aspect of the embodiments of the present application provides a content displaying method, wherein the method comprises:
detecting whether a sight line with which a driving person watches a first display screen is blocked, wherein the first display screen is located on a right side of the driving person;
if it has been detected that the sight line with which the driving person watches the first display screen is blocked, determining a second display screen associated with the first display screen; and
controlling the second display screen to display a content of the first display screen.

Optionally, the method further comprises:
controlling the second display screen to perform angle adjustment.

Optionally, the step of controlling the second display screen to perform the angle adjustment comprises at least one of:
controlling the second display screen to turn leftwardly by a preset angle; and
controlling a sum of an angle of the second display screen and an angle of the first display screen to be 180 degrees.

Optionally, the method further comprises:
according to a displaying parameter value of the first display screen, adjusting a displaying parameter value of the second display screen.

Optionally, the step of, according to the displaying parameter value of the first display screen, adjusting the displaying parameter value of the second display screen comprises at least one or more of:
according to a brightness value of the first display screen, controlling a brightness value of the second display screen;
according to a length-width ratio of the first display screen, controlling a length-width ratio of the second display screen; and
according to a refresh rate of the first display screen, controlling a refresh rate of the second display screen.

Optionally, the method further comprises:
if it has been detected that the sight line with which the driving person watches the first display screen is blocked, determining a blocking degree with which the sight line is blocked, wherein the blocking degree is for characterizing a state in which a visual-field area of the sight line is blocked; and
the step of, if it has been detected that the sight line with which the driving person watches the first display screen is blocked, determining the second display screen associated with the first display screen comprises:
if the blocking degree exceeds a first blocking-degree threshold, determining the second display screen to be a third display screen; and
if the blocking degree exceeds a second blocking-degree threshold, determining the second display screen to be a fourth display screen, wherein the second blocking-degree threshold is greater than the first blocking-degree threshold, and the fourth display screen is a display screen that is closer to the driving person than the third display screen is.

Optionally, the method further comprises:
if it has been detected that the sight line with which the driving person watches the first display screen is blocked, determining a blocking degree with which the sight line is blocked, wherein the blocking degree is for characterizing a state in which a visual-field area of the sight line is blocked; and
the step of controlling the second display screen to display the content of the first display screen comprises:
   if the blocking degree exceeds a third blocking-degree threshold, controlling a first displaying region of the second display screen to display the content of the first display screen; and
   if the blocking degree exceeds a fourth blocking-degree threshold, controlling a second displaying region of the second display screen to display the content of the first display screen, wherein the third blocking-degree threshold is greater than the fourth blocking-degree threshold, and the first displaying region is a displaying region that is closer to the driving person than the second displaying region is.

Optionally, if it has been detected that the sight line with which the driving person watches the first display screen is blocked, the method further comprises:
determining a blocking duration for which the sight line is blocked, and/or determining a blocking time quantity with which the sight line is blocked; and
if the blocking duration exceeds a duration threshold and/or the blocking time quantity exceeds a time-quantity threshold, determining that it is required to, by using the second display screen, display the content of the first display screen; and
the step of determining the second display screen associated with the first display screen comprises:
   if it has been determined that it is required to, by using the second display screen, display the content of the first display screen, executing the step of determining the second display screen associated with the first display screen.

Optionally, the step of detecting whether the sight line with which the driving person watches the first display screen is blocked comprises:
acquiring a first driving-person image collected with respect to the driving person;
according to the first driving-person image, detecting whether a target site of the driving person is blocked; and
if the target site is blocked, determining that the sight line is blocked.

Optionally, the step of detecting whether the sight line with which the driving person watches the first display screen is blocked comprises:
acquiring a first head image of the driving person, and acquiring a second head image of a copilot;
determining an area of overlapping between the first head image and the second head image; and
if the area of overlapping is greater than an area threshold, determining that the sight line is blocked.

Optionally, the step of detecting whether the sight line with which the driving person watches the first display screen is blocked comprises:
determining a distance between a copilot and a copilot screen; and
if the distance is less than a distance threshold, determining that the sight line is blocked.

Optionally, the step of detecting whether the sight line with which the driving person watches the first display screen is blocked comprises:
determining whether a copilot is operating a copilot screen; and
if the copilot is operating the copilot screen, determining that the sight line is blocked.

Optionally, the step of detecting whether the sight line with which the driving person watches the first display screen is blocked comprises:
acquiring a position of a driving-person seat and a position of a copilot seat;
determining an included angle between a connecting line between the driving-person seat and the copilot seat and a horizontal direction of a vehicle body; and
if the included angle is greater than an angle threshold, determining that the sight line is blocked.

Optionally, the method further comprises:
detecting whether a target event has happened; and
if it has been detected that the target event has happened, executing the step of detecting whether the sight line with which the driving person watches the first display screen is blocked, wherein that the target event has happened includes at least one of that a vehicle state satisfies a first predetermined condition and that a driving-person state satisfies a second predetermined condition.

Optionally, the method further comprises:
if it has been detected that the target event has happened, controlling the second display screen to display the content of the first display screen, wherein that the target event has happened includes at least one of that a vehicle state satisfies a first predetermined condition and that a driving-person state satisfies a second predetermined condition.

The second aspect of the embodiments of the present application provides a content displaying system, wherein the content displaying system comprises at least a first display screen, a second display screen, a controller and a vehicle-body outer-side camera;
the vehicle-body outer-side camera is configured for performing image collection to an outer side of a vehicle body; and
the controller is configured for:
   detecting whether a sight line with which a driving person watches the first display screen is blocked, wherein the first display screen is located on a right side of the driving person;
   if it has been detected that the sight line with which the driving person watches the first display screen is blocked, determining the second display screen associated with the first display screen; and
   controlling the second display screen to display a content of the first display screen, wherein the content of the first display screen is a content of an image collected by the vehicle-body outer-side camera.

Optionally, a first camera is integrated under the first display screen;
the first camera is configured for collecting a first driving-person image; and
the controller is configured for acquiring the first driving-person image, according to the first driving-person image, detecting whether a target site of the driving person is blocked, and if the target site is blocked, determining that the sight line is blocked.

Optionally, a first camera is integrated under the first display screen;
the first camera is configured for collecting a first head image of the driving person and a second head image of a copilot; and
the controller is configured for acquiring the first head image and the second head image, determining an area of overlapping between the first head image and the second head image, and if the area of overlapping is greater than an area threshold, determining that the sight line is blocked.

Optionally, the first camera is under the first display screen and on a right side of the first display screen.

Optionally, a second camera is integrated under the second display screen;
the second camera is configured for collecting a second driving-person image; and
the controller is configured for, according to the second driving-person image, detecting whether a driving-person state satisfies a second predetermined condition.

Optionally, the second display screen comprises at least one of a master-control screen, a dashboard and a copilot screen.

Optionally, the first display screen is a rear-view-mirror display screen.

The third aspect of the embodiments of the present application provides a content displaying method, wherein the method comprises:
detecting whether a current sight line of a driving person is a sight line that watches an exterior of a vehicle;
if it has been detected that the current sight line of the driving person is a sight line that watches the exterior of the vehicle, determining an inside-vehicle display screen; and
controlling the inside-vehicle display screen to display vehicle-exterior information.

Optionally, the method further comprises:
if it has been detected that the current sight line of the driving person is a sight line that watches the exterior of the vehicle, determining a displaying mode of the inside-vehicle display screen; and
the step of controlling the inside-vehicle display screen to display the vehicle-exterior information comprises:
   controlling the inside-vehicle display screen to display the vehicle-exterior information in the displaying mode;
   wherein the displaying mode includes a first displaying mode or a second displaying mode;
   the first displaying mode refers to a displaying mode in which information that the inside-vehicle display screen has already displayed is hidden and the vehicle-exterior information is displayed; and
   the second displaying mode refers to a displaying mode in which the vehicle-exterior information and part of information that the inside-vehicle display screen has already displayed are displayed.

Optionally, the method further comprises:
if it has been detected that the current sight line of the driving person is not a sight line that watches the exterior of the vehicle, controlling the inside-vehicle display screen not to display the vehicle-exterior information.

The fourth aspect of the embodiments of the present application provides a content displaying system, wherein the content displaying system comprises at least an inside-vehicle display screen, a controller and a vehicle-body outer-side camera;
the vehicle-body outer-side camera is configured for performing image collection to an outer side of a vehicle body; and
the controller is configured for:
   detecting whether a current sight line of a driving person is a sight line that watches an exterior of a vehicle;
   if it has been detected that the current sight line of the driving person is a sight line that watches the exterior of the vehicle, determining the inside-vehicle display screen; and
   controlling the inside-vehicle display screen to display vehicle-exterior information, wherein the vehicle-exterior information is image information collected by the vehicle-body outer-side camera.

Optionally, a third camera is integrated under the inside-vehicle display screen;
the third camera is configured for collecting a third driving-person image; and
the controller is configured for acquiring the third driving-person image, and according to the third driving-person image, detecting whether the current sight line of the driving person is a sight line that watches the exterior of the vehicle.

Optionally, the inside-vehicle display screen comprises at least one of a master-control screen, a dashboard and a copilot screen.

The fifth aspect of the embodiments of the present application provides a vehicle, wherein the vehicle comprises a controller, and the controller is configured for implementing the steps of the content displaying method according to the first aspect of the present application or configured for implementing the steps of the content displaying method according to the third aspect of the present application.

The sixth aspect of the embodiments of the present application provides an electronic device, wherein the electronic device comprises a memory, a processor and a computer program that is stored in the memory and is executable in the processor, and the processor, when executing the computer program, implements the steps of the content displaying method according to the first aspect of the present application or the steps of the content displaying method according to the third aspect of the present application.

In the embodiments of the present application, it may be detected whether the sight line with which the driving person watches the first display screen is blocked, and if it has been detected that the sight line with which the driving person watches the first display screen is blocked, the second display screen associated with the first display screen may be determined and the second display screen may be controlled to display the content of the first display screen. Accordingly, the driving person can, when his sight line with which he watches the target screen on the right is blocked, watch the content of the target screen on the right from the other display screens, which ensures that the sight line with which the driving person watches the target content during the driving is not interfered, and the driving person can watch the target content without being blocked, to improve the driving safety.

### BRIEF DESCRIPTION OF THE DRAWINGS

In order to more clearly illustrate the technical solutions of the embodiments of the present application, the figures that are required to describe the embodiments of the present application will be briefly described below. Apparently, the figures that are described below are embodiments of the present application, and a person skilled in the art can obtain other figures according to these figures without paying creative work.
FIG. 1 is a schematic diagram of an intelligent-cabin displaying module according to an embodiment of the present application;
FIG. 2 is a schematic diagram when the driving person watches the display screens in a normal situation according to an embodiment of the present application;
FIG. 3 is a schematic diagram when the driving person watches the display screens with the sight line being blocked according to an embodiment of the present application;
FIG. 4 is another schematic diagram when the driving person watches the display screens with the sight line being blocked according to an embodiment of the present application;
FIG. 5 is a flow chart of a content displaying method according to an embodiment of the present application;
FIG. 6 is a schematic diagram of adjustment on the display screens according to an embodiment of the present application;
FIG. 7 is a schematic diagram of adjustment on the display screens according to another embodiment of the present application;
FIG. 8 is a schematic diagram of a method for displaying a target content according to an embodiment of the present application;
FIG. 9 is a schematic diagram of a method for displaying a target content according to another embodiment of the present application;
FIG. 10 is a schematic diagram of determination on blocking of a target sight line according to an embodiment of the present application;
FIG. 11 is a schematic diagram of determination on blocking of a target sight line according to an embodiment of the present application;
FIG. 12 is a schematic diagram of determination on blocking of a target sight line according to an embodiment of the present application;
FIG. 13 is a schematic flow chart of a method for controlling the displaying of a target content based on primary-driver perception according to an embodiment of the present application;
FIG. 14 is a schematic diagram of determination on blocking of a sight line according to an embodiment of the present application;
FIG. 15 is a schematic diagram of controlling over the displaying of a target content according to an embodiment of the present application;
FIG. 16 is a schematic diagram of controlling over the displaying of a target content according to an embodiment of the present application;
FIG. 17 is a schematic flow chart of a method for controlling the displaying of a target content based on copilot perception according to an embodiment of the present application;
FIG. 18 is a schematic flow chart of a method for controlling the displaying of a target content based on event sensation according to an embodiment of the present application;
FIG. 19 is a schematic flow chart of a method for controlling the displaying of a target content based on blocking detection and determination after event triggering according to an embodiment of the present application;
FIG. 20 is a schematic flow chart of a method for controlling the displaying of a target content in a copilot screen according to an embodiment of the present application;
FIG. 21 is a schematic diagram of controlling over the displaying of a target content according to an embodiment of the present application;
FIG. 22 is a schematic diagram of controlling over the displaying of a target content according to an embodiment of the present application;
FIG. 23 is a schematic diagram of a system architecture according to an embodiment of the present application;
FIG. 24 is a schematic diagram of a content displaying system according to an embodiment of the present application;
FIG. 25 is a flow chart of a content displaying method according to an embodiment of the present application;
FIG. 26 is a schematic diagram of a content displaying method according to an embodiment of the present application;
FIG. 27 is a schematic diagram of a content displaying method according to an embodiment of the present application; and
FIG. 28 is a schematic diagram of a content displaying system according to an embodiment of the present application.

### DETAILED DESCRIPTION

In order to make the above purposes, features and advantages of the present application more apparent and understandable, the present application will be described in further detail below with reference to the drawings and the particular embodiments.

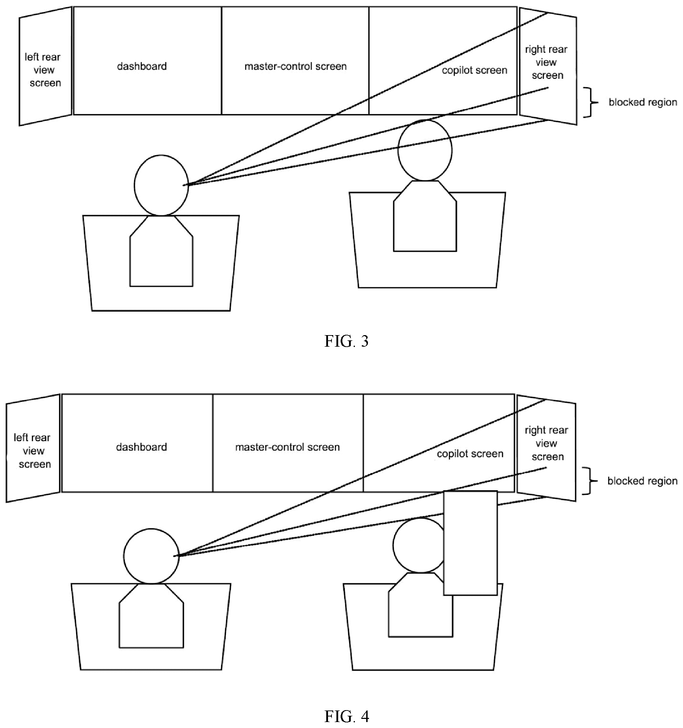

As stated above, that the sight line of the driving person is blocked and the driving person cannot watch the rear-view-mirror display screens might, in practice, have various cases. For example, the sight line with which the driving person watches a right rear view screen during the driving is blocked by a copilot passenger. In a case, as shown in FIG. 3, the body of the copilot passenger inclines forwardly, which causes that the sight line with which the driving person watches the right rear view screen is blocked. In another case, as shown in FIG. 4, the copilot passenger carries a large-size article, which causes that the sight line with which the driving person watches the right rear view screen is blocked, which affects the driving safety.

Therefore, in order to at least partially solve one or more of the above problem and other potential problems, the embodiments of the present application provide a content displaying method. It is detected whether the sight line with which the driving person watches a first display screen is blocked, and if it has been detected that the sight line with which the driving person watches the first display screen (for example, a rear view screen of the electronic rear view mirror) is blocked, a second display screen corresponding to the first display screen can be determined, thereby controlling the second display screen to display the content of the first display screen. Accordingly, the driving person can, when his sight line with which he watches the first display screen is blocked, watch the content of the first display screen from another display screen than the first display screen, i.e., the second display screen, which ensures that the sight line with which the driving person watches the target content (for example, the content displayed by the electronic rear view mirror) during the driving is not interfered, and the driving person can watch the target content without being blocked, to improve the driving safety.

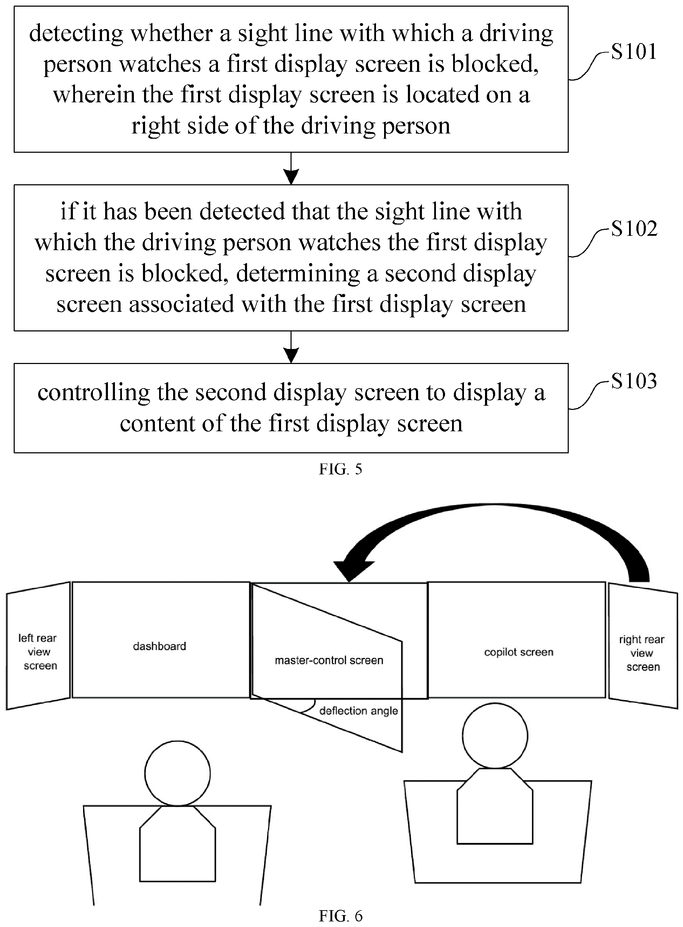

Referring to FIG. 5, FIG. 5 shows a flow chart of a content displaying method according to an embodiment of the present application. The content displaying method according to the embodiments of the present application may be applied in a controller, and the controller may perform relevant controlling over the vehicle-mounted terminals and the inside-vehicle component elements. The content displaying method may comprise the following steps:

S101: detecting whether a sight line with which a driving person watches a first display screen is blocked, wherein the first display screen is located on a right side of the driving person.

During the travelling of the vehicle, the driving person may watch the content displayed by the first display screen. The first display screen refers to the inside-vehicle display screen located on the right side of the driving person that the driving person is currently watching. The first display screen may be any one display screen for the driving person to watch the driving-related information, and, for example, may be a master-control screen, a center-control screen, a copilot screen, an electronic rear view screen, and so on, which is not limited in the embodiments of the present application. In the embodiments of the present application, it may be detected in real time whether the sight line with which the driving person watches the first display screen is blocked.

S102: if it has been detected that the sight line with which the driving person watches the first display screen is blocked, determining a second display screen associated with the first display screen.

In the embodiments of the present application, if it has been detected that the sight line with which the driving person watches the first display screen is blocked, a second display screen associated with the first display screen may be determined. In the present embodiment, the second display screen that is determined when it has been detected that the sight line is blocked may be any one or more inside-vehicle display screens other than the first display screen.

S103: controlling the second display screen to display a content of the first display screen.

In the embodiments of the present application, after the second display screen associated with the first display screen has been determined, the second display screen may be controlled to display the content displayed by the first display screen.

Accordingly, in the embodiments of the present application, if it has been detected that the sight line with which the driving person watches the first display screen is blocked, the corresponding second display screen can be determined, to control the second display screen to display the content of the first display screen. Accordingly, the driving person can, when his sight line with which he watches the first display screen located on the right is blocked, watch the content of the first display screen from the inside-vehicle second display screen, which ensures that the sight line with which the driving person watches the target content during the driving is not interfered, and the driving person can watch the target content without being blocked, to improve the driving safety.

In combination with the above embodiments, an embodiment of the present application provides a content displaying method. The method may further comprise the following step:
S201: controlling the second display screen to perform angle adjustment.

In the embodiments of the present application, the controller may, before or after or simultaneously with controlling the second display screen to display the content of the first display screen, adjust the practical hardware angle of the second display screen, whereby the driving person can more clearly watch the content of the first display screen displayed by the second display screen.

In other words, in the present embodiment, optionally, the step S201 may be executed firstly and the step S103 may be executed subsequently. Optionally, the step S103 may be executed firstly and the step S201 may be executed subsequently. Optionally, the step S201 and the step S103 may be executed simultaneously. The sequence of the execution of the step S201 and the step S103 is not limited in any manner in the present embodiment.

In combination with the above embodiments, an embodiment of the present application provides a content displaying method. In the method, S201 may comprise at least one of the following steps:
S2011: controlling the second display screen to turn leftwardly by a preset angle.

In the present embodiment, the preset angle of the second display screen may be set in advance, which is used for, before or after or simultaneously with controlling the second display screen to display the content of the first display screen, controlling the second display screen to turn leftwardly by the preset angle that was set in advance. The particular numerical value of the preset angle is not limited, and may be specified randomly according to demands.

Correspondingly, in the present embodiment, optionally, the step S2011 may be executed firstly and the step S103 may be executed subsequently. Optionally, the step S103 may be executed firstly and the step S2011 may be executed subsequently. Optionally, the step S2011 and the step S103 may be executed simultaneously. The sequence of the execution of the step S2011 and the step S103 is not limited in any manner in the present embodiment.

As an example, as shown in FIG. 6, FIG. 6 is a schematic diagram of adjustment on the display screens according to an embodiment of the present application. In the present embodiment, the first display screen is the right rear view screen, and the second display screen is the master-control screen. Before or after or simultaneously with controlling the second display screen to display the content of the first display screen, the master-control screen may be controlled to turn leftwardly by a deflection angle that was set in advance, whereby the driving person can more clearly watch the content of the first display screen displayed by the second display screen.

S2012: controlling a sum of an angle of the second display screen and an angle of the first display screen to be 180 degrees.

In the present embodiment, before or after or simultaneously with controlling the second display screen to display the content of the first display screen, the sum of the angle of the second display screen and the angle of the first display screen may be controlled to be 180 degrees, to ensure that the first display screen and the second display screen are of a symmetric relation, whereby the driving person can more clearly watch the content of the first display screen displayed by the second display screen.

Correspondingly, in the present embodiment, optionally, the step S2012 may be executed firstly and the step S103 may be executed subsequently. Optionally, the step S103 may be executed firstly and the step S2012 may be executed subsequently. Optionally, the step S2012 and the step S103 may be executed simultaneously. The sequence of the execution of the step S2012 and the step S103 is not limited in any manner in the present embodiment.

In combination with the above embodiments, an embodiment of the present application provides a content displaying method. The method may further comprise the following step:
S301: according to a displaying parameter value of the first display screen, adjusting a displaying parameter value of the second display screen.

In the embodiments of the present application, before or after or simultaneously with controlling the second display screen to display the content of the first display screen, the displaying parameter value of the second display screen may be adjusted to a certain extent according to the displaying parameter value of the first display screen, wherein the displaying parameter includes at least one or more of the displaying brightness, the displaying contrast, the length-width ratio and the refresh rate, whereby the driving person can more clearly watch the target content displayed by the second display screen. In addition, by adjusting the displaying parameter of the second display screen according to the parameter of the first display screen, a consistent visual impression of the driving person can be maintained, to improve the experience of the driving person.

In the present embodiment, optionally, the step S301 may be executed firstly and the step S103 may be executed subsequently. Optionally, the step S103 may be executed firstly and the step S301 may be executed subsequently. Optionally, the step S301 and the step S103 may be executed simultaneously. The sequence of the execution of the step S301 and the step S103 is not limited in any manner in the present embodiment.

Particularly, in an embodiment, S301 comprises at least one or more of the following steps:
S3011: according to a brightness value of the first display screen, controlling a brightness value of the second display screen.

Generally, the brightness of the first display screen, for example, a rear view screen, is higher. Therefore, in the present embodiment, the brightness value of the second display screen may be controlled according to the brightness value of the first display screen, for example, increasing the brightness value of the second display screen, which maintains a consistent visual impression of the driving person, to improve the experience of the driving person.

S3012: according to a length-width ratio of the first display screen, controlling a length-width ratio of the second display screen.

Generally, the length-width ratio of the first display screen, for example, a rear view screen, is that the horizontal length is less than the vertical length, while the length-width ratio of the second display screen is usually that the horizontal length is greater than the vertical length. Therefore, in the present embodiment, the length-width ratio of the second display screen may be controlled according to the length-width ratio of the first display screen, for example, stretching or contracting the second display screen, or splitting the second display screen, whereby the length-width ratio of one of the split screens obtained after the splitting is equal to the length-width ratio of the first display screen, which maintains a consistent visual impression of the driving person, to improve the experience of the driving person.

S3013: according to a refresh rate of the first display screen, controlling a refresh rate of the second display screen.

Generally, the refresh rate of the first display screen, for example, a rear view screen, is higher. Therefore, in order to prevent delay of the displaying of the content of the first display screen by the second display screen, in the present embodiment, the refresh rate of the second display screen may be controlled according to the refresh rate of the first display screen, for example, increasing the refresh rate of the second display screen, which maintains a consistent visual impression of the driving person, to improve the experience of the driving person.

Correspondingly, in the present embodiment, optionally, any one or more of the steps S3011-S3013 may be executed firstly and the step S103 may be executed subsequently. Optionally, the step S103 may be executed firstly and any one or more of the steps S3011-S3013 may be executed subsequently. Optionally, the step S103 and any one or more of the steps S3011-S3013 may be executed simultaneously. Neither of the sequence among the execution of any one or more of the steps S3011-S3013 nor the sequence of the execution of any one or more of the steps S3011-S3013 and the step S103 is limited in any manner in the present embodiment.

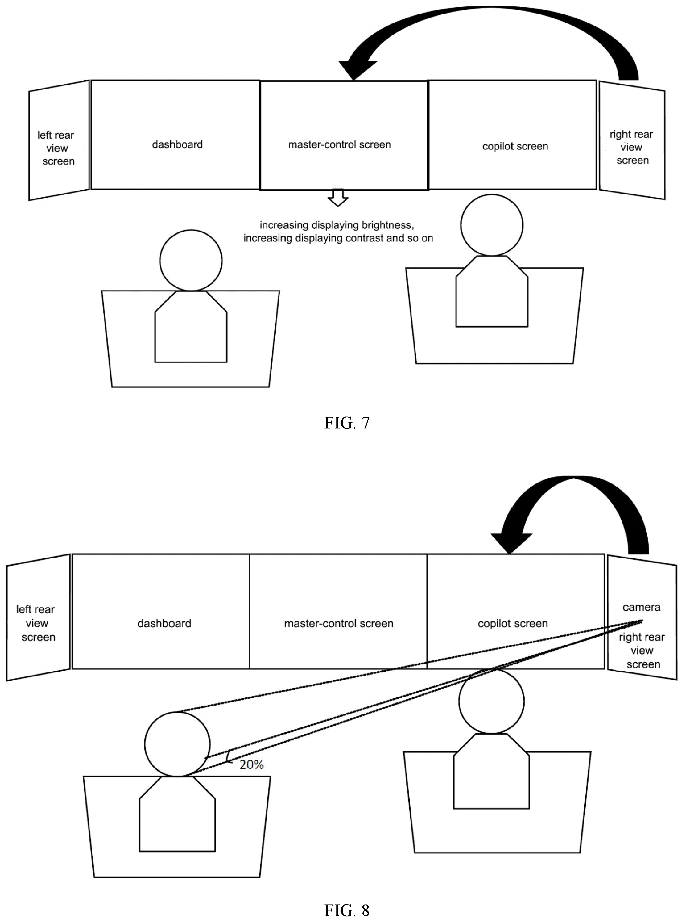

As an example, as shown in FIG. 7, FIG. 7 is a schematic diagram of adjustment on the display screens according to another embodiment of the present application. In the present embodiment, the first display screen is the right rear view screen, and the second display screen is the master-control screen. After or before or simultaneously with controlling the master-control screen to display the content of the right rear view screen, the displaying brightness and/or the displaying contrast of the master-control screen may be adjusted, for example, increasing the displaying brightness and increasing the displaying contrast, whereby the driving person can more clearly watch the content of the first display screen displayed by the second display screen.

In an embodiment, before or after or simultaneously with controlling the second display screen to display the content of the first display screen, the angle of the second display screen and the displaying parameter value of the second display screen may be adjusted correspondingly at the same time, whereby the driving person can further more clearly watch the content of the first display screen displayed by the second display screen, which maintains a consistent visual impression of the driving person, to improve the experience of the driving person.

In combination with the above embodiments, an embodiment of the present application provides a content displaying method. The method, besides the above steps, may further comprise the step S401, and S102 may comprise the sub-steps S402 and S403:
S401: if it has been detected that the sight line with which the driving person watches the first display screen is blocked, determining a blocking degree with which the sight line is blocked.

In the embodiments of the present application, if it has been detected that the sight line with which the driving person watches the first display screen is blocked, the blocking degree with which the sight line of the driving person is blocked may be determined, wherein the blocking degree is for characterizing the state in which the visual-field area of the sight line is blocked. For example, the blocking degree may be a blocking angle, a blocking percentage and so on, which is not limited.

S402: if the blocking degree exceeds a first blocking-degree threshold, determining the second display screen to be a third display screen.

In the embodiments of the present application, blocking-degree thresholds are set in advance, for the classification of the blocking degree. The blocking-degree thresholds include a first blocking-degree threshold and a second blocking-degree threshold, wherein the second blocking-degree threshold is greater than the first blocking-degree threshold.

The controller may compare the determined blocking degree with the blocking-degree thresholds, and, if has determined that the blocking degree exceeds the first blocking-degree threshold and is less than the second blocking-degree threshold, determine the second display screen to be a third display screen, so as to display the content of the first display screen by using the third display screen.

S403: if the blocking degree exceeds a second blocking-degree threshold, determining the second display screen to be a fourth display screen.

In the embodiments of the present application, if it has been determined that the blocking degree exceeds the second blocking-degree threshold, the second display screen may be determined to be a fourth display screen, so as to display the content of the first display screen by using the fourth display screen. The second display screen according to the present embodiment comprises at least the third display screen and the fourth display screen, and the fourth display screen is a display screen that is closer to the driving person than the third display screen is.

As an example, as shown in FIG. 8, FIG. 8 is a schematic diagram of a method for displaying a target content according to an embodiment of the present application. In the present embodiment, the first display screen is the right rear view screen, and the first blocking-degree threshold is 20%. If it has been determined that the blocking degree exceeds 20%, the second display screen is determined to be a third display screen, i.e., the copilot screen, and the content of the right rear view screen is transmitted to the copilot screen, whereby the driving person can watch the content of the right rear view screen from the copilot screen.

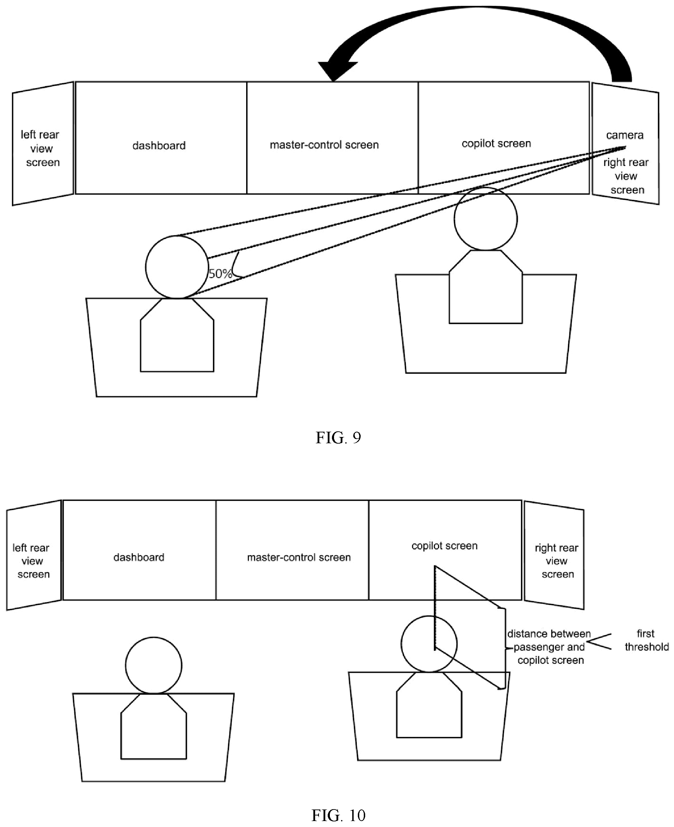

As shown in FIG. 9, FIG. 9 is a schematic diagram of a method for displaying a target content according to another embodiment of the present application. In the present embodiment, the first display screen is the right rear view screen, and the second blocking-degree threshold is 50%. If it has been determined that the blocking degree exceeds 50%, the second display screen is determined to be a fourth display screen, i.e., the master-control screen, and the target content is transmitted to the master-control screen, whereby the driving person can watch the content of the right rear view screen from the master-control screen, wherein the master-control screen is closer to the position where the driving person is located than the copilot screen is.

Accordingly, by using the embodiments of the present application, the content of the first display screen may, based on the unequal blocking degrees, be transmitted to the different display screens, wherein if the blocking degree is higher, the second display screen that is closer to the position of the driving person is used to display the target content. That, while ensuring that the driving person can watch the target content without being blocked, further improves the experience with which the driving person watches the target content.

In combination with the above embodiments, in another embodiment, an embodiment of the present application provides a content displaying method. The method, besides the above steps, may further comprise the step S501, and S103 may comprise the sub-steps S502 and S503:
S501: if it has been detected that the sight line with which the driving person watches the first display screen is blocked, determining a blocking degree with which the sight line is blocked.

In the embodiments of the present application, if it has been detected that the sight line with which the driving person watches the first display screen is blocked, the blocking degree with which the sight line of the driving person is blocked may be determined, wherein the blocking degree is for characterizing the state in which the visual-field area of the sight line is blocked. For example, the blocking degree may be a blocking angle, a blocking percentage and so on, which is not limited.

S502: if the blocking degree exceeds a third blocking-degree threshold, controlling a first displaying region of the second display screen to display the content of the first display screen.

In the embodiments of the present application, blocking-degree thresholds are set in advance, for the classification of the blocking degree. The blocking-degree thresholds may include a third blocking-degree threshold and a fourth blocking-degree threshold, wherein the third blocking-degree threshold is greater than the fourth blocking-degree threshold.

The controller may compare the determined blocking degree with the blocking-degree thresholds, and, if it has been determined that the blocking degree exceeds the third blocking-degree threshold, control a first displaying region of the second display screen to display the content of the first display screen.

S503: if the blocking degree exceeds a fourth blocking-degree threshold, controlling a second displaying region of the second display screen to display the content of the first display screen.

In the embodiments of the present application, if it has been determined that the blocking degree exceeds the fourth blocking-degree threshold and is less than the third blocking-degree threshold, a second displaying region of the second display screen may be controlled to display the content of the first display screen. The first displaying region according to the present embodiment is a displaying region that is closer to the driving person than the second displaying region is. In other words, the first displaying region in the second display screen is closer to the position where the driving person is located than the second displaying region of the second display screen is.

As an example, in an embodiment, the first display screen is the right rear view screen, and the second display screen is the master-control screen, the copilot screen and so on. According to the unequal blocking degrees, the content of the first display screen may be transmitted to the different positions of the master-control screen or the copilot screen. When the blocking degree is greater than the fourth blocking-degree threshold of 20%, the content of the right rear view mirror is transmitted to the second displaying region of the master-control screen or the copilot screen, i.e., the right side of the master-control screen or the copilot screen. When the blocking degree is greater than the third blocking-degree threshold of 50%, the content of the right rear view mirror is transmitted to the first displaying region of the master-control screen or the copilot screen, i.e., the left side of the master-control screen or the copilot screen. The left side of the master-control screen or the copilot screen is closer to the position of the driving person than the right side of the master-control screen or the copilot screen is.

Accordingly, by using the embodiments of the present application, the content of the first display screen may, based on the unequal blocking degrees, be transmitted to the different positions of the second display screen, wherein if the blocking degree is higher, the displaying region that is closer to the position of the driving person is used to display the target content. That, while ensuring that the driving person can watch the target content without being blocked, further improves the experience with which the driving person watches the target content.

In combination with the above embodiments, an embodiment of the present application provides a content displaying method. The method, besides the above steps, if it has been detected that the sight line with which the driving person watches the first display screen is blocked, may further comprise the steps S601 and S602, and the "determining the second display screen associated with the first display screen" in the step S102 may comprise the sub-step S603:
S601: determining a blocking duration for which the sight line is blocked, and/or determining a blocking time quantity with which the sight line is blocked.

In the embodiments of the present application, a duration threshold and a time-quantity threshold are set in advance. The duration threshold refers to the longest duration in a permissible range during which the sight line with which the driving person watches the first display screen is blocked, and the time-quantity threshold refers to the maximum time quantity in a permissible range with which the sight line with which the driving person watches the first display screen is blocked. If it has been detected that the sight line with which the driving person watches the first display screen is blocked, the blocking duration during which the sight line with which the driving person watches the first display screen is blocked may be determined, and/or the blocking time quantity with which the sight line with which the driving person watches the first display screen is blocked may be determined.

S602: if the blocking duration exceeds a duration threshold and/or the blocking time quantity exceeds a time-quantity threshold, determining that it is required to, by using the second display screen, display the content of the first display screen.

In the embodiments of the present application, after the blocking duration and/or the blocking time quantity have/has been determined, the blocking duration may be compared with the duration threshold, and/or the blocking time quantity may be compared with the time-quantity threshold. If it has been determined that the blocking duration exceeds the duration threshold and/or the blocking time quantity exceeds the time-quantity threshold, the controller determines that it is required to, by using the second display screen, display the content of the first display screen.

In other words, in the present embodiment, if it has been determined that the blocking duration does not exceed the duration threshold and/or the blocking time quantity does not exceed the time-quantity threshold, that indicates that the sight-line blocking is short and not frequent, and the driving person can continue seeing the target content by watching the first display screen. In this case, the target content may continue being displayed by the first display screen, and it is not required to display the target content by using the second display screen.

S603: if it has been determined that it is required to, by using the second display screen, display the content of the first display screen, executing the step of determining the second display screen associated with the first display screen.

In the embodiments of the present application, the controller, if it has been determined that it is required to, by using the second display screen, display the content of the first display screen, may determine the second display screen associated with the first display screen; in other words, it may execute the step of determining the second display screen associated with the first display screen.

In the present embodiment, instead of switching the screens for displaying once the blocking happens, it may be determined whether the second display screen is required to display the target content further based on the duration and the time quantity of the blocking. That can, by using the duration and the time quantity, exclude occasional blocking, which can, by referring to the practical situation of the blocking, further improve the driving experience of the driving person.

In combination with the above embodiments, an embodiment of the present application provides a content displaying method. In the method, the step S101 may comprise the following steps:
S701: acquiring a first driving-person image collected with respect to the driving person.

In the embodiments of the present application, the first display screen is the right rear view screen, and a camera is integrated with the right rear view screen. The camera may collect an image of the driving person, to obtain the first driving-person image. The controller may acquire the first driving-person image for analysis and processing. The camera integrated with the right rear view screen may be an under-screen camera, and the position of the camera at the right rear view screen is not limited.

S702: according to the first driving-person image, detecting whether a target site of the driving person is blocked.

In the embodiments of the present application, a target site of the driving person may be detected according to the first driving-person image, to detect whether the target site of the driving person is blocked. The target site may be a feature site of the driving person, for example, the head, the eyes and eyeglasses.

As an example, if the target site is the head of the driving person, it may be determined, based on the first driving-person image, whether the whole head of the driving person can be detected. If the whole head of the driving person can be acquired, then it is determined that the target site is not blocked. If the whole head of the driving person cannot be acquired, then it is determined that the target site is blocked.

If the target site is an ear of the driving person, it may be determined, based on the first driving-person image, whether the ear of the driving person can be detected. If the ear of the driving person can be acquired, then it is determined that the target site is not blocked. If the ear of the driving person cannot be acquired, then it is determined that the target site is blocked.

S703: if the target site is blocked, determining that the target sight line is blocked.

In the embodiments of the present application, if it has been determined that the target site is blocked, it can be determined that it has been detected that the sight line with which the driving person watches the first display screen is blocked.

In the embodiments of the present application, the detection on the blocking of the sight line with which the driving person watches the right rear view screen may be performed based on the camera integrated with the first display screen, so as to accurately perform the determination on the sight-line blocking by the detection of the target site from the visual angle of the first display screen.

In combination with any one of the above embodiments, an embodiment of the present application provides a content displaying method. In the method, the step S101 may comprise the following steps:
S801: acquiring a first head image of the driving person, and acquiring a second head image of a copilot.

In the embodiments of the present application, the first display screen is the right rear view screen, and a camera is integrated with the right rear view screen. The camera can cover the area of the primary-driving-person seat and the copilot seat. The under-screen camera may collect the image of the driving person and the copilot in real time, to obtain the first head image of the driving person and the second head image of a copilot. The controller may acquire the first head image of the driving person, and acquire the second head image of the copilot for analysis and processing. The camera integrated with the right rear view screen may be an under-screen camera, and the position of the camera at the right rear view screen is not limited.

S802: determining an area of overlapping between the first head image and the second head image.

S803: if the area of overlapping is greater than an area threshold, determining that the sight line is blocked.

In the embodiments of the present application, after the first head image and the second head image have been acquired, the area of overlapping between the first head image and the second head image may be determined, the area of overlapping may be compared with an area threshold that was set in advance, and, if it has been determined that the area of overlapping is greater than the area threshold, then it can be determined that it has been detected that the sight line with which the driving person watches the first display screen is blocked. The area threshold according to the present embodiment refers to the maximum area of the head of the driving person that is blocked by the head of the copilot in a permissible range in which the first display screen can be watched.

In the embodiments of the present application, the detection on the blocking of the target sight line of the driving person may be performed based on the camera integrated with the first display screen, so as to accurately perform the determination on the sight-line blocking by the detection on the area of overlapping between the driving person and the copilot from the visual angle of the first display screen.

In combination with any one of the above embodiments, an embodiment of the present application provides a content displaying method. In the method, the step S101 may comprise the following steps:
S901: determining a distance between a copilot and a copilot screen.

In the embodiments of the present application, the first display screen is the right rear view screen. The controller may determine the distance between the copilot and the copilot screen, so as to determine based on the distance whether the copilot blocks the target sight line with which the driving person watches the right rear view screen.

As an example, in an embodiment, optionally, the distance between the copilot and the copilot screen is determined by using an inside-vehicle sensor. Optionally, the feature information of the copilot is acquired by using the under-screen camera of the copilot screen, and subsequently the distance between the copilot and the copilot screen is determined by using the feature information. That is not limited in the present embodiment.

S902: if the distance is less than a distance threshold, determining that the sight line is blocked.

In the embodiments of the present application, a distance threshold is set in advance. The distance threshold refers to the minimum distance between the copilot and the copilot screen when the copilot does not block the sight line of the driving person. The controller may compare the acquired distance between the copilot and the copilot screen with the distance threshold, and, if it has been determined that the distance is less than the distance threshold, it can be determined that it has been detected that the sight line with which the driving person watches the first display screen is blocked.

In an embodiment, the distance threshold may be determined based on the position relation between the driving person and the copilot seat. The distance threshold includes a first threshold or a second threshold. When, in the horizontal direction inside the vehicle, the driving-person seat is behind the copilot seat, it is determined that the minimum distance between the copilot and the copilot screen when the copilot does not block the sight line of the driving person is the first threshold. When, in the horizontal direction inside the vehicle, the driving-person seat is in front of the copilot seat, it is determined that the minimum distance between the copilot and the copilot screen when the copilot does not block the sight line of the driving person is the second threshold. The first threshold is greater than the second threshold.

Accordingly, in the distance comparison, as shown in FIG. 10, wherein FIG. 10 is a schematic diagram of determination on blocking of a target sight line according to an embodiment of the present application, in FIG. 10, when, in the horizontal direction inside the vehicle, the driving-person seat is behind the copilot seat, the distance between the copilot and the copilot screen may be compared with the first threshold, and, if it has been determined that the distance is less than the first threshold, it can be determined that it has been detected that the sight line with which the driving person watches the first display screen is blocked.

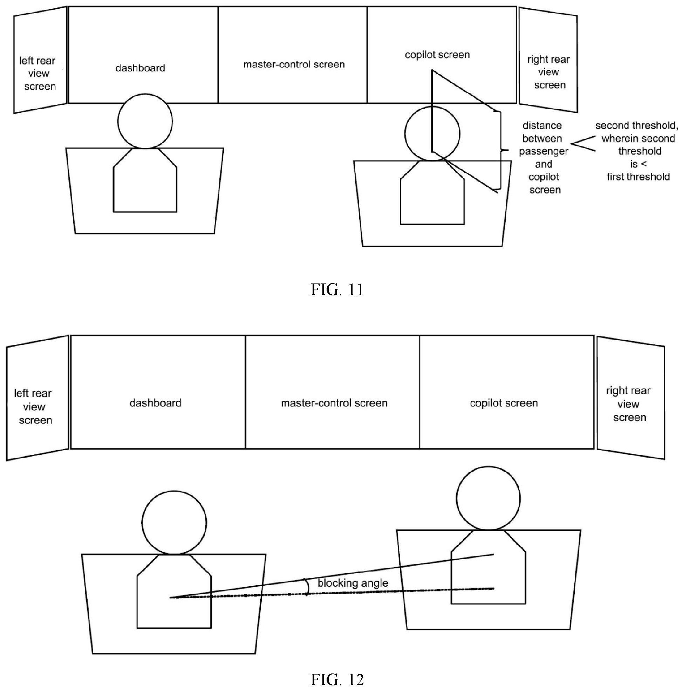

Additionally, as shown in FIG. 11, wherein FIG. 11 is a schematic diagram of determination on blocking of a target sight line according to an embodiment of the present application, in FIG. 11, when, in the horizontal direction inside the vehicle, the driving-person seat is in front of the copilot seat, the distance between the copilot and the copilot screen may be compared with the second threshold, and, if it has been determined that the distance is less than the second threshold, it can be determined that it has been detected that the sight line with which the driving person watches the first display screen is blocked. The second threshold is less than the first threshold.

In the embodiments of the present application, the detection on the blocking of the sight line with which the driving person watches the first display screen may be performed based on the distance between the copilot and the copilot screen, so as to accurately perform the determination on the sight-line blocking according to the vehicle-interior situation of the copilot.

In combination with any one of the above embodiments, an embodiment of the present application provides a content displaying method. In the method, the step S101 may comprise the following steps:
S1001: determining whether a copilot is operating a copilot screen.

In the embodiments of the present application, the first display screen is the right rear view screen. The controller may, by using a response message sent by the copilot screen, determine whether the copilot is operating the copilot screen. When the copilot is operating the copilot screen, the copilot screen may respond based on the operation by the user, and send the response message to the controller, so as to notify the controller that currently the copilot is operating the copilot screen.

S1002: if the copilot is operating the copilot screen, determining that the sight line is blocked.

In the embodiments of the present application, because, in the scene in which the copilot is operating the copilot screen, usually the copilot requires operating the screen at a short distance, if the controller has determined that the copilot is operating the copilot screen, it can be determined that the copilot has a low distance from the copilot screen, and might block the sight line with which the driving person watches the right rear view screen. Therefore, in the present embodiment, in such a case, it can be directly determined that it has been detected that the sight line with which the driving person watches the first display screen is blocked, so as to ensure to the largest extent that the sight line of the driving person is not blocked.

In the embodiments of the present application, the detection on the blocking of the sight line with which the driving person watches the first display screen may be performed based on the operation by the copilot to the copilot screen, so as to accurately perform the determination on the sight-line blocking according to the vehicle-interior situation of the copilot.

In combination with the above embodiments, in an embodiment, the detection on the blocking of the sight line with which the driving person watches the first display screen based on the operation by the copilot to the copilot screen may be performed concurrently with the detection on the blocking of the sight line with which the driving person watches the first display screen based on the distance between the copilot and the copilot screen.

In combination with any one of the above embodiments, an embodiment of the present application provides a content displaying method. In the method, the step S101 may comprise the following steps:
S1101: acquiring a position of a driving-person seat and a position of a copilot seat.
S1102: determining an included angle between a connecting line between the driving-person seat and the copilot seat and a horizontal direction of a vehicle body.

In the embodiments of the present application, the position of the driving-person seat and the position of the copilot seat may be acquired by using an inside-vehicle sensor, and subsequently the included angle between the connecting line between the driving-person seat and the copilot seat and the horizontal direction of the vehicle body is determined.

S1103: if the included angle is greater than an angle threshold, determining that the sight line is blocked.

In the embodiments of the present application, an angle threshold is set in advance. After the included angle between the connecting line between the driving-person seat and the copilot seat and the horizontal direction of the vehicle body has been acquired, the controller may compare the included angle with the angle threshold, and, if it has been determined that the included angle between the connecting line between the driving-person seat and the copilot seat and the horizontal direction of the vehicle body is greater than the angle threshold, it can be determined that it has been detected that the sight line with which the driving person watches the first display screen is blocked.

As an example, as shown in FIG. 12, FIG. 12 is a schematic diagram of determination on blocking of a target sight line according to an embodiment of the present application. In FIG. 12, the controller may acquire the positions of the primary-driving-person seat and the copilot seat, determine whether the included angle between the connecting line therebetween and the horizontal direction of the vehicle body (i.e., the blocking angle in FIG. 12) is greater than an angle threshold, and, if the included angle is greater than the angle threshold (for example, 10 degrees), then determine that the sight line with which the driving person watches the first display screen is blocked.

In combination with any one of the above embodiments, an embodiment of the present application provides a content displaying method. The method, besides the above steps, may further comprise the following steps:
S1201: detecting whether a target event has happened.

In the embodiments of the present application, the controller may monitor a target event, to detect in real time whether the target event happens. The target event refers to an event the occurrence of which requires the driving person to watch the first display screen, and/or an emergency event that happens during the travelling. That the target event has happened includes at least one of that a vehicle state satisfies a first predetermined condition and that a driving-person state satisfies a second predetermined condition. The occurrence of the target event characterizes that the driving person has the intention to watch the first display screen.

S1202: if it has been detected that the target event has happened, executing the step of detecting whether the sight line with which the driving person watches the first display screen is blocked.

In the embodiments of the present application, merely if it has been detected that the target event has happened, i.e., when it has been determined that the driving person has the intention to watch the first display screen, the relevant detection on whether the sight line with which the driving person watches the first display screen is blocked is started by using the above-described method, so as to more accurately determine whether the sight line of the driving person is blocked. In addition, that can reduce the power consumption of the device corresponding to the detection on the sight line with which the driving person watches the first display screen, and prevent it from always being in the operating state, and merely when it has been detected that the target event has happened, the device is activated to perform the blocking determination.

In combination with any one of the above embodiments, an embodiment of the present application provides a content displaying method. The method, besides the above steps, may further comprise the following step:
S1301: if it has been detected that the target event has happened, controlling the second display screen to display the content of the first display screen.

In the embodiments of the present application, not only if it has been detected that the sight line with which the driving person watches the first display screen is blocked, the second display screen is controlled to display the content of the first display screen, but also a target event may be detected, and, if it has been detected that the target event has happened, the second display screen is controlled to display the content of the first display screen. The target event refers to an event the occurrence of which requires the driving person to watch the first display screen, and/or an emergency event that happens during the travelling. That the target event has happened includes at least one of that a vehicle state satisfies a first predetermined condition and that a driving-person state satisfies a second predetermined condition. The occurrence of the target event characterizes that the driving person has the intention to watch the first display screen.

In addition, in an embodiment, the target event may also include that the state of the copilot satisfies a third predetermined condition. That the state of the copilot satisfies the third predetermined condition includes at least that the copilot closes the eyes or that the copilot sleeps. Because usually the first display screen has a high displaying brightness, and the brightness of the light rays might affect the eyes or the sleeping quality of the copilot, in an embodiment, if it has been detected that the copilot closes the eyes or sleeps, the second display screen is controlled to display the content of the first display screen, and the content displaying by the first display screen is stopped. In another embodiment, if it has been detected that the copilot closes the eyes or sleeps, the second display screen is controlled to display the content of the first display screen, the content displaying by the first display screen is not stopped, and merely the displaying brightness of the first display screen is adjusted to be lower. That, while ensuring that the copilot is not affected by the brightness of the first display screen, ensures that the driving person can watch the content of the first display screen from the second display screen.

In combination with any one of the above embodiments, in an embodiment, that the vehicle state satisfies the first predetermined condition comprises at least one or more of: that the right turn lights of the vehicle are turned on, and the rightward turning of the tyres of the vehicle exceeds a first angle; that the left turn lights of the vehicle are turned on, and the leftward turning of the tyres of the vehicle exceeds a second angle; that the emergency light of the vehicle is turned on; and that the vehicle is in the state of emergency brake.

In combination with any one of the above embodiments, in an embodiment, that the driving-person state satisfies the second predetermined condition includes that the rightward turning of the head of the driving person exceeds a third angle. All of the first angle, the second angle and the third angle are preset critical values. For example, the third angle may be 40 degrees, and the first angle and the second angle may be 10 degrees, wherein the particular numerical values are not limited in any manner.

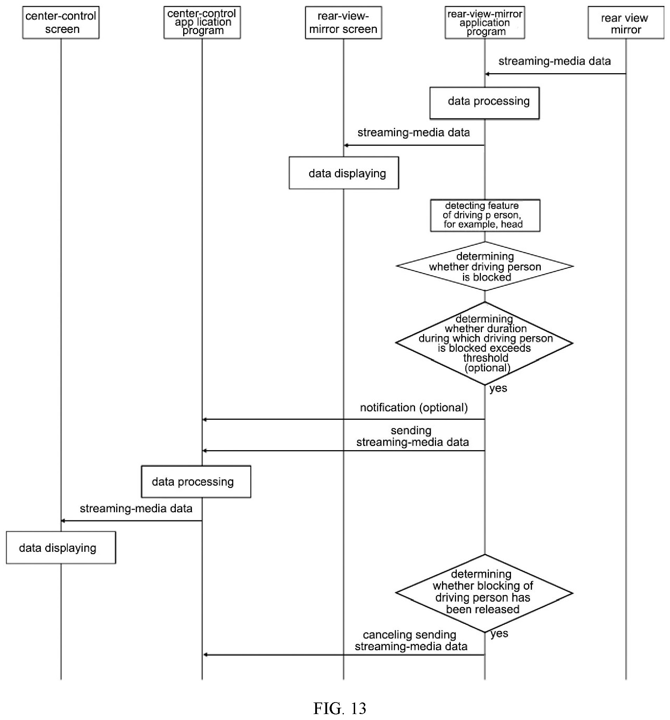

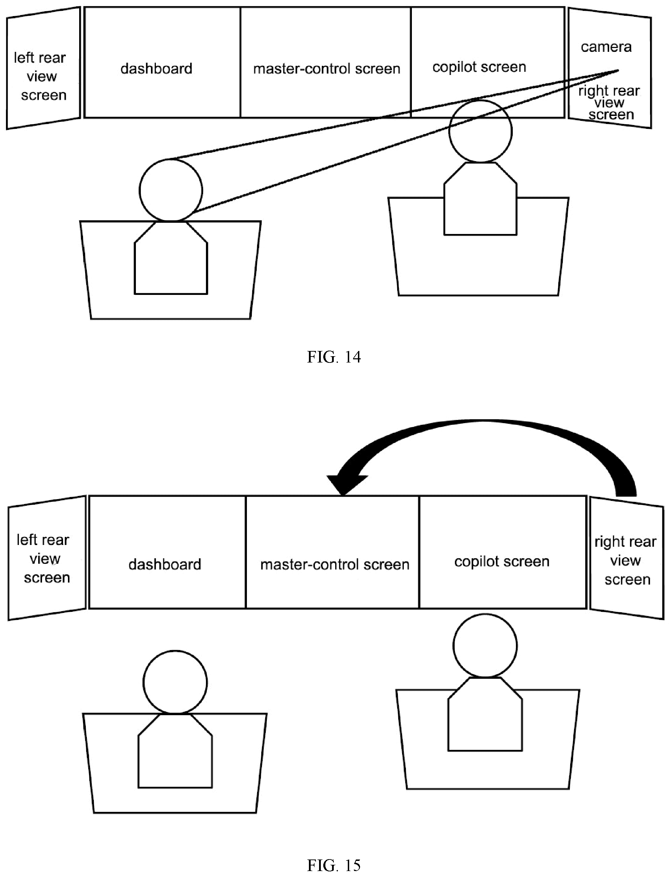

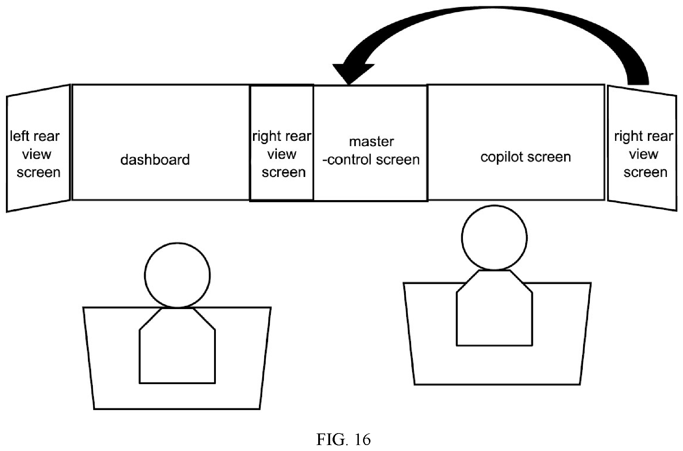

Referring to FIG. 13, FIG. 13 shows a schematic flow chart of a method for controlling the displaying of a target content based on primary-driver perception according to an embodiment of the present application. In the method, the center-control screen is the second display screen, a rear-view-mirror screen is the first display screen, the center-control screen corresponds to a center-control application program, the rear-view-mirror screen corresponds to a rear-view-mirror application program, and the controller comprises the center-control application program and the rear-view-mirror application program. The content displaying method comprises the following steps:
(1) The rear-view-mirror application program acquires streaming-media data that are collected and sent by the rear view mirror.
(2) The rear-view-mirror application program performs data processing to the streaming-media data, for example, image enhancement and distortion processing.
(3) The rear-view-mirror application program sends the streaming-media data obtained by the processing to the rear-view-mirror screen for data displaying.
(4) An under-screen camera is integrated with the rear view mirror. The rear-view-mirror application program may detect the feature site of the driving person, for example, the head and the eyeglasses, by using the under-screen camera, and accordingly determine whether the feature site of the driving person is blocked, for example, whether the head of the driving person is blocked. Particularly, as shown in FIG. 14, FIG. 14 is a schematic diagram of determination on blocking of a sight line according to an embodiment of the present application. The rear-view-mirror application program performs the determination on the sight-line blocking by detecting the feature site of the driving person, and the determination may be performed by collecting the image by using the camera carried by the rear-view-mirror screen. Preferably, the camera of the right rear view screen is located on the right side of the right rear view screen.
(5) If it has been determined that the feature site of the driving person has been blocked, optionally, it is further determined whether the duration of the blocking satisfies a certain threshold, for example, 2s, and, if the certain threshold is satisfied, then the next step is executed. Optionally, the time quantity with which the driving person is blocked is counted up, and, if the time quantity exceeds a certain threshold, then the next step is executed.
(6) Optionally, the rear-view-mirror application program sends a notification to the center-control application program.
(7) The center-control application program acquires the streaming-media data from the rear-view-mirror application program.
(8) Optionally, the center-control application program may perform data processing to the streaming-media data, for example, a stretching processing for matching the size of the center-control screen.
(9) The center-control application program sends the streaming-media data to the center-control screen for displaying.
(10) Optionally, the center-control application program may display the content of the right rear view screen in the master-control screen in full screen. As shown in FIG. 15, FIG. 15 is a schematic diagram of controlling over the displaying of a target content according to an embodiment of the present application. It may also be displayed in part of the master-control screen. As shown in FIG. 16, FIG. 16 is a schematic diagram of controlling over the displaying of a target content according to an embodiment of the present application. In FIG. 16, the content of the right rear view screen (the first display screen) is displayed in the part on the right of the master-control screen (the second display screen).

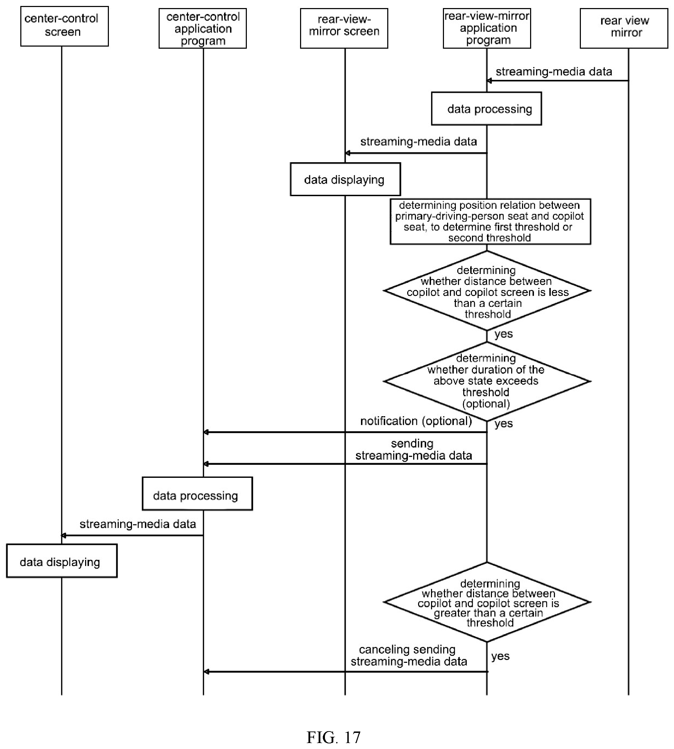

Referring to FIG. 17, FIG. 17 shows a schematic flow chart of a method for controlling the displaying of a target content based on copilot perception according to an embodiment of the present application. In the method, the center-control screen is the second display screen, a rear-view-mirror screen is the first display screen, the center-control screen corresponds to a center-control application program, the rear-view-mirror screen corresponds to a rear-view-mirror application program, and the controller comprises the center-control application program and the rear-view-mirror application program. The content displaying method comprises the following steps:
(1) The rear-view-mirror application program acquires streaming-media data that are sent by the rear view mirror.
(2) The rear-view-mirror application program performs data processing to the streaming-media data, for example, image enhancement and distortion processing.
(3) The rear-view-mirror application program sends the streaming-media data obtained by the processing to the rear-view-mirror screen for displaying.
(4) The rear-view-mirror application program determines the position relation between the primary-driving-person seat and the copilot seat, to determine a first threshold or a second threshold. If the primary-driving-person seat is behind the copilot seat, the first threshold is determined, and, if the primary-driving-person seat is in front of the copilot seat, the second threshold is determined, wherein the first threshold is greater than the second threshold.
(5) The detection on whether the feature site of the driving person is blocked may be processed by an entertainment application program. For example, the distance between the copilot passenger and the copilot screen is determined, and, if it is less than a certain threshold, then it is determined that the driving person is blocked. In addition, optionally, the feature information of the copilot passenger is acquired by using a built-in camera in the copilot screen, subsequently the distance between the copilot passenger and the copilot screen is determined, and, if it is less than a certain threshold, then it is determined that the driving person is blocked.
(6) As a solution parallel to (4), when the copilot screen has detected that the passenger is operating the copilot screen, it is determined that the driving person might be blocked.
(7) If it has been determined that the feature site of the driving person has been blocked, optionally, it is further determined whether the duration of the blocking satisfies a certain threshold, for example, 2s, and, if the certain threshold is satisfied, then the next step is executed. Optionally, the time quantity with which the driving person is blocked is counted up, and, if the time quantity exceeds a certain threshold, then the next step is executed.
(8) Optionally, the rear-view-mirror application program sends a notification to the center-control application program.
(8) The center-control application program acquires the streaming-media data from the rear-view-mirror application program.
(9) Optionally, the center-control application program may perform data processing to the streaming-media data, for example, a stretching processing for matching the size of the center-control screen.
(10) The center-control application program sends the streaming-media data to the center-control screen for displaying.
(11) The rear-view-mirror application program continues to determine whether the distance between the copilot and the copilot screen is greater than a certain threshold, and, if yes, then cancels sending the streaming-media data to the center-control application program.

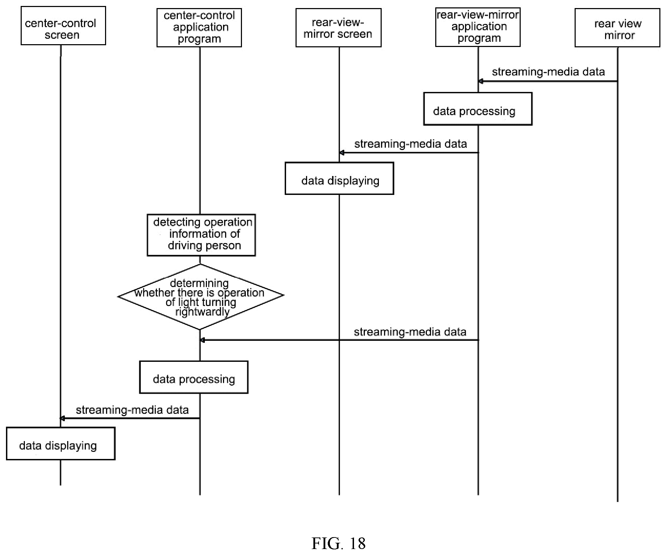

Referring to FIG. 18, FIG. 18 shows a schematic flow chart of a method for controlling the displaying of a target content based on event sensation according to an embodiment of the present application. In the method, the center-control screen is the second display screen, a rear-view-mirror screen is the first display screen, the center-control screen corresponds to a center-control application program, the rear-view-mirror screen corresponds to a rear-view-mirror application program, and the controller comprises the center-control application program and the rear-view-mirror application program. The content displaying method comprises the following steps:
(1) The rear-view-mirror application program acquires streaming-media data that are sent by the rear view mirror.
(2) The rear-view-mirror application program processes the streaming-media data, for example, image enhancement and distortion processing.
(3) The rear-view-mirror application program sends the streaming-media data obtained by the processing to the rear-view-mirror display screen for displaying.
(4) The center-control application program detects the operation information of the driving person, to sense variation of the vehicle state.
(5) If it has been determined that the variation of the vehicle state satisfies a predetermined condition, then the center-control application program acquires the streaming-media data from the rear-view-mirror application program. The predetermined condition includes that the rightward turning of the head exceeds a certain angle (for example, 40 degrees), that the right turn lights are turned on and the rightward turning of the tyres exceeds a certain angle (for example, 10 degrees), that the left turn lights are turned on and the leftward turning of the tyres exceeds a certain angle (for example, 10 degrees), that the emergency light is turned on, an emergency brake, and so on.
(6) Optionally, the center-control application program may detect a particular state of the driving person. For example, if it has been detected that the head of the driving person turns rightwardly, then the center-control application program acquires the streaming-media data from the rear-view-mirror application program.
(7) Optionally, the center-control application program may process the streaming-media data, for example, a stretching processing for matching the size of the center-control screen.
(8) The center-control application program sends the streaming-media data to the center-control screen for displaying.

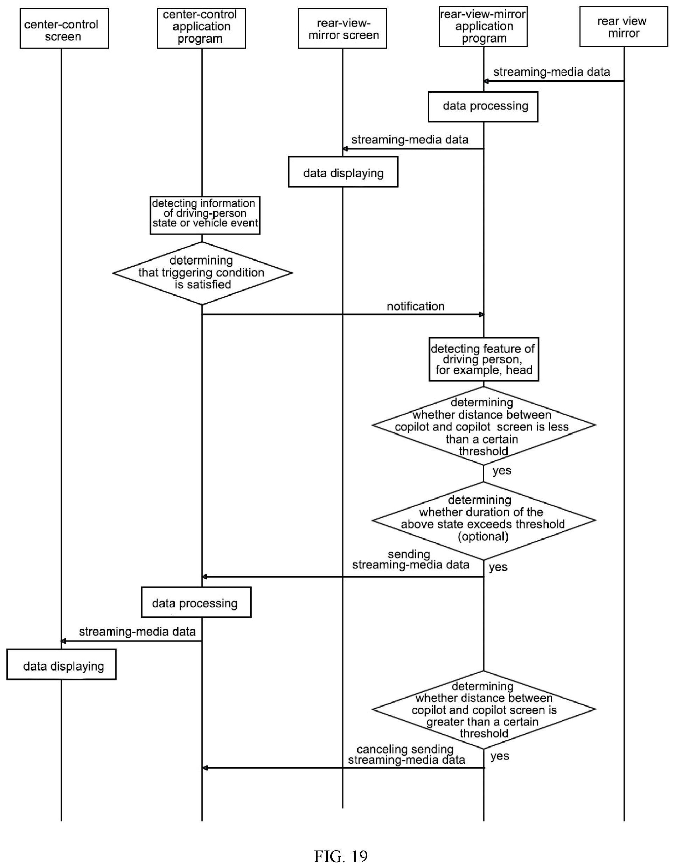

Referring to FIG. 19, FIG. 19 shows a schematic flow chart of a method for controlling the displaying of a target content based on blocking detection and determination after event triggering according to an embodiment of the present application. In the method, the center-control screen is the second display screen, a rear-view-mirror screen is the first display screen, the center-control screen corresponds to a center-control application program, the rear-view-mirror screen corresponds to a rear-view-mirror application program, and the controller comprises the center-control application program and the rear-view-mirror application program. The content displaying method comprises the following steps:
(1) A driving-assistance application program identifies the driving person, acquires the image information of the driving person watching the left and right rear view mirrors, and inputs the image information into a neural network, for the identification on the act of the driving person watching the left and right rear view mirrors.
(2) The rear-view-mirror application program acquires streaming-media data that are sent by the rear view mirror.
(3) The rear-view-mirror application program performs data processing to the streaming-media data, for example, image enhancement and distortion processing.
(4) The rear-view-mirror application program sends the streaming-media data obtained by the processing to the rear-view-mirror screen for displaying.
(5) The center-control application program detects a driving-person-state event and/or a vehicle event. The driving-person-state event includes that the rightward turning of the head exceeds a certain angle (for example, 40 degrees), and that the neural network model has identified that the user is watching the rear view mirror.
(6) Optionally, the vehicle event includes that the right turn lights are turned on and the rightward turning of the tyres exceeds a certain angle (for example, 10 degrees), that the left turn lights are turned on and the leftward turning of the tyres exceeds a certain angle (for example, 10 degrees), that the emergency light is turned on, an emergency brake, and so on.
(7) If it has been determined that the driving-person-state event and/or vehicle event satisfies a predetermined condition, then the next step is executed.
(8) If it has been detected that the driving-person-state event and/or vehicle event satisfies the predetermined condition, the center-control application program notifies the rear-view-mirror application program to detect whether the sight line of the driving person is blocked. For example, the distance between the copilot passenger and the copilot screen is determined, and, if it is less than a certain threshold, then it is determined that the driving person is blocked. In addition, optionally, the feature information of the copilot passenger is acquired by using a built-in camera in the copilot screen, subsequently the distance between the copilot passenger and the copilot screen is determined, and, if it is less than a certain threshold, then it is determined that the driving person is blocked. In addition, a camera A integrated with the right rear view screen may be used. The camera A can cover the area of the primary-driving-person seat and the copilot seat. The camera A acquires in real time a real-time image of the primary-driving-person seat and the copilot seat, and the camera A, by determining whether the whole head of the driving person can be acquired, determines whether the driving person is blocked. Optionally, the camera A detects an ear of the driving person, if the ear can be detected then it is determined that there is no blocking, and, if the ear cannot be detected then it is determined that there is blocking.
(9) If it has been determined that the feature site of the driving person has been blocked, optionally, it is further determined whether the duration of the blocking satisfies a certain threshold, for example, 2s, and, if the certain threshold is satisfied, then the next step is executed. Optionally, the time quantity with which the driving person is blocked is counted up, and, if the time quantity exceeds a certain threshold, then the next step is executed.
(10) Optionally, the rear-view-mirror application program sends a notification to the center-control application program.
(11) The center-control application program acquires the streaming-media data from the rear-view-mirror application program.
(12) Optionally, the center-control application program may perform data processing to the streaming-media data, for example, a stretching processing for matching the size of the center-control screen.
(13) The center-control application program sends the streaming-media data to the center-control screen for displaying.
(14) Optionally, the center-control application program may display the content of the right rear view screen in the master-control screen in full screen. It may also be displayed in part of the master-control screen.
(15) The rear-view-mirror application program continues to determine whether the distance between the copilot and the copilot screen is greater than a certain threshold, and, if yes, then cancels sending the streaming-media data to the center-control application program.

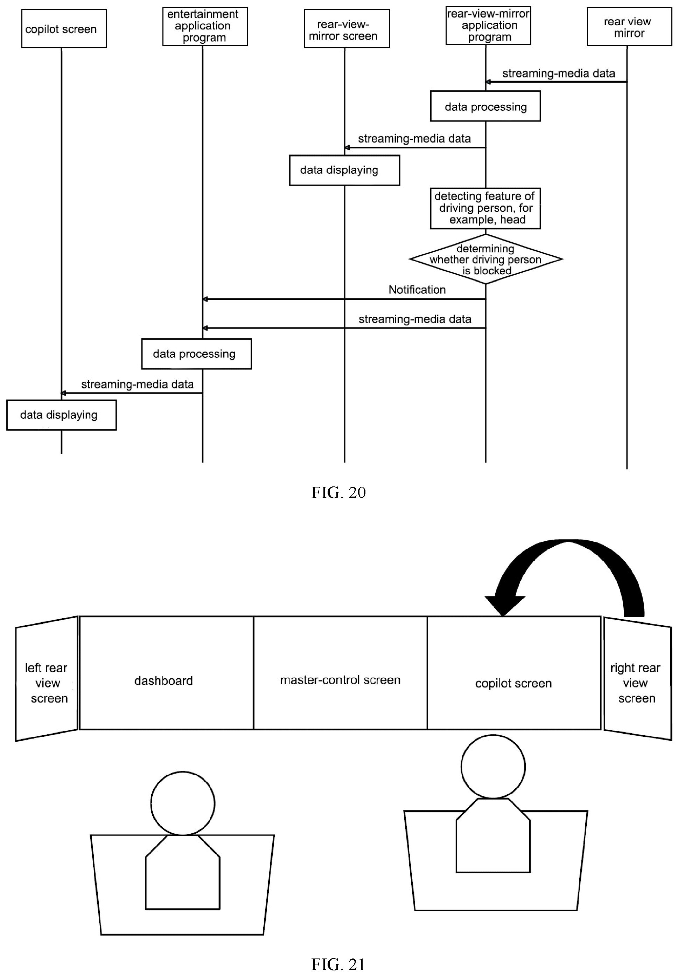

Referring to FIG. 20, FIG. 20 shows a schematic flow chart of a method for controlling the displaying of a target content in the copilot screen according to an embodiment of the present application. In the method, the copilot screen is the second display screen, a rear-view-mirror screen is the first display screen, the copilot screen corresponds to an entertainment application program, the rear-view-mirror screen corresponds to a rear-view-mirror application program, and the controller comprises the entertainment application program and the rear-view-mirror application program. The content displaying method comprises the following steps:
(1) The rear-view-mirror application program acquires streaming-media data that are sent by the rear view mirror.
(2) The rear-view-mirror application program performs data processing to the streaming-media data, for example, image enhancement and distortion processing.
(3) The rear-view-mirror application program sends the streaming-media data obtained by the processing to the rear-view-mirror screen for displaying.
(4) The rear-view-mirror application program detects the feature site of the driving person, for example, the head and the eyeglasses, and accordingly determines whether the feature site of the driving person is blocked, for example, whether the head of the driving person is blocked. The detection on the feature site of the driving person by the rear-view-mirror application program may be performed by using the camera carried by the rear-view-mirror screen.
(5) Optionally, if it has been determined that the feature site of the driving person has been blocked, optionally, it is further determined whether the duration of the blocking satisfies a certain threshold, for example, 2s, and, if the certain threshold is satisfied, then the next step is executed.
(6) The rear-view-mirror application program, after has determined that the driving person is blocked, sends a notification to the entertainment application program.
(7) The entertainment application program acquires the streaming-media data from the rear-view-mirror application program.
(8) Optionally, the entertainment application program may perform data processing to the streaming-media data, for example, a stretching processing for matching the size of the center-control screen.
(9) The entertainment application program sends the streaming-media data to the copilot screen for displaying. As shown in FIG. 21, FIG. 21 is a schematic diagram of controlling over the displaying of a target content according to an embodiment of the present application. In FIG. 21, the content of the right rear view screen (the first display screen) is displayed in the copilot screen (the second display screen).
(10) Optionally, the detection on whether the feature site of the driving person is blocked may be processed by an entertainment application program. For example, the distance between the copilot passenger and the copilot screen is determined, and, if it is less than a certain threshold, then it is determined that the driving person is blocked. In addition, optionally, the feature information of the copilot passenger is acquired by using a built-in camera in the copilot screen, subsequently the distance between the copilot passenger and the copilot screen is determined, and, if it is less than a certain threshold, then it is determined that the driving person is blocked.

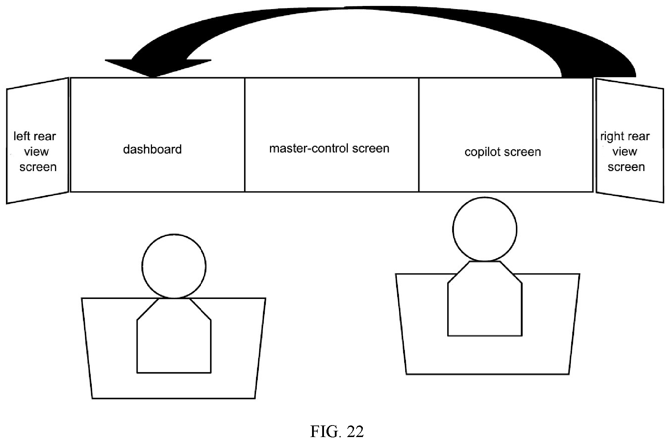

In another embodiment, the second display screen may also be a dashboard. As shown in FIG. 22, FIG. 22 is a schematic diagram of controlling over the displaying of a target content according to an embodiment of the present application. In FIG. 22, the content of the right rear view screen (the first display screen) is displayed in the dashboard (the second display screen).

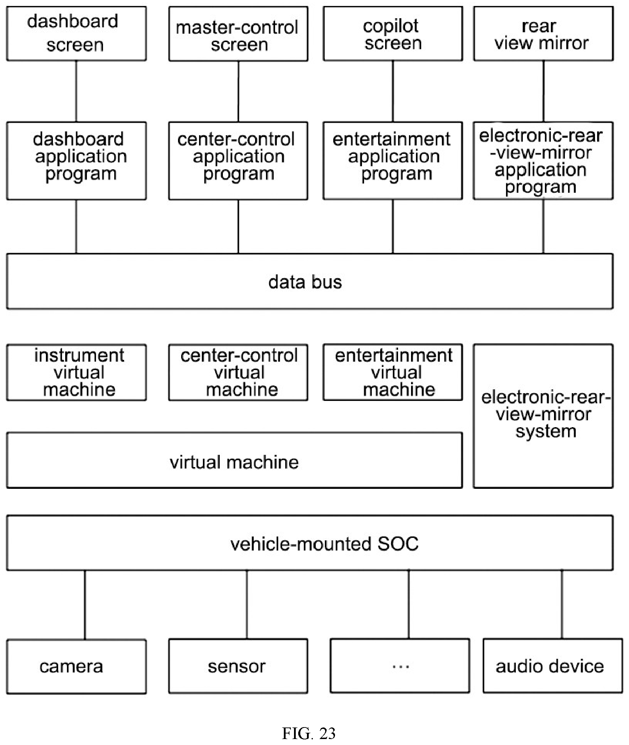

In an embodiment, the overall system structure according to the present embodiment is shown in FIG. 23, wherein FIG. 23 is a schematic diagram of a system architecture according to an embodiment of the present application. The host of the electronic rear view mirror may employ a real-time operating system in a virtual machine. In addition, the system of the electronic rear view mirror may not be based on a virtual machine, but be directly carried in a vehicle-mounted SOC or carried in an MCU, wherein the MCU and the vehicle-mounted SOC are connected.

In different virtual-machine systems, a collective data bus is constructed, to provide a collective API interface for the upper-layer application programs. The upper-layer application programs may, by using the data bus, acquire the data sensed by the vehicle, for example, the data of a vehicle-mounted camera, and display the data in the corresponding screens.

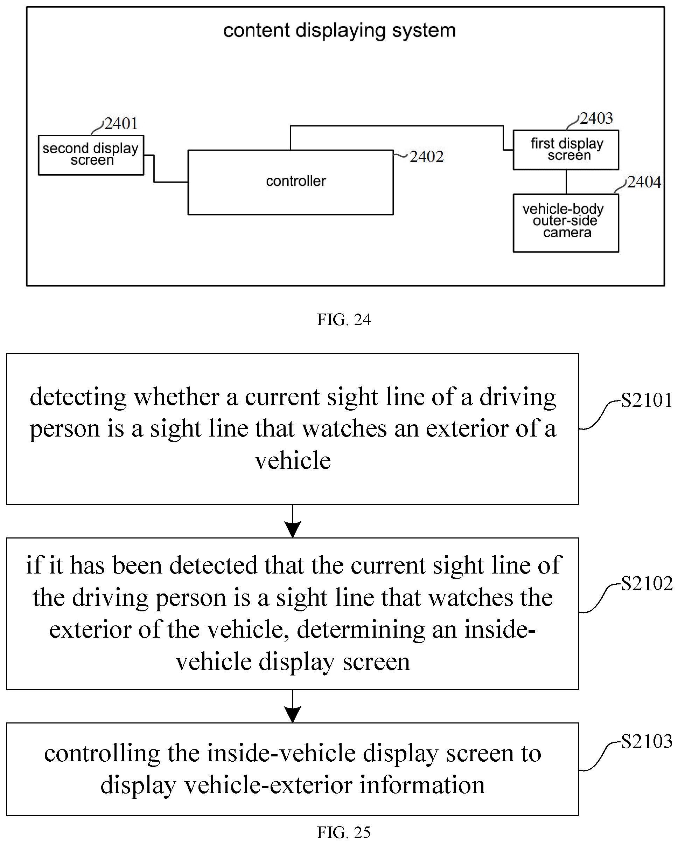

On the basis of the same inventive concept, an embodiment of the present application provides a content displaying system. Referring to FIG. 24, FIG. 24 is a schematic diagram of a content displaying system according to an embodiment of the present application. The content displaying system comprises at least a first display screen 2403, a second display screen 2401, a controller 2402 and a vehicle-body outer-side camera 2404.

The vehicle-body outer-side camera 2404 is configured for performing image collection to the outer side of the vehicle body.

In the embodiments of the present application, the vehicle-body outer-side camera corresponds to the first display screen, and is configured for performing image collection to the outer side of the vehicle body.

The controller 2402 is configured for:
detecting whether the sight line with which the driving person watches the first display screen 2403 is blocked, wherein the first display screen 2403 is located on the right side of the driving person;
if it has been detected that the sight line with which the driving person watches the first display screen 2403 is blocked, determining the second display screen 2401 associated with the first display screen 2403; and
controlling the second display screen 2401 to display the content of the first display screen 2403, wherein the content of the first display screen 2403 is the content of the image collected by the vehicle-body outer-side camera 2404.

In the embodiments of the present application, the first display screen refers to the display screen located inside the vehicle on the right side of the driving person that the driving person is currently watching. The first display screen may be any one display screen that can be used by the driving person to watch the driving-related information. The first display screen may display the target content collected by the vehicle-body outer-side camera.

The controller, if it has been detected that the sight line with which the driving person watches the first display screen is blocked, the second display screen associated with the first display screen may be determined, and the second display screen may be controlled to display the content of the first display screen. The second display screen is one or more inside-vehicle display screens other than the first display screen.

In combination with the above embodiments, an embodiment of the present application provides a content displaying system. In the content displaying system, a first camera is integrated under the first display screen.

The first camera is configured for collecting a first driving-person image.

In the embodiments of the present application, the first display screen may be the right rear view screen. The first camera in the right rear view screen may collect the image of the driving person, so as to obtain the first driving-person image by the collection.

The controller is configured for acquiring the first driving-person image, according to the first driving-person image, detecting whether a target site of the driving person is blocked, and if the target site is blocked, determining that the sight line is blocked.

In the embodiments of the present application, after the first camera has collected the first driving-person image, the controller may acquire the first driving-person image from the first camera, and according to the first driving-person image, detect whether the target site of the driving person is blocked, and if the target site is blocked, determine that the sight line with which the driving person watches the first display screen is blocked.

In combination with the above embodiments, an embodiment of the present application provides a content displaying system. In the content displaying system, a first camera is integrated under the first display screen.

The first camera is configured for collecting a first head image of the driving person and a second head image of a copilot.

In the embodiments of the present application, the first display screen may be the right rear view screen. The first camera in the right rear view screen can cover the area of the primary-driving-person seat and the copilot seat, and may collect the real-time image of the driving person and the copilot, so as to collect to obtain the first head image of the driving person and the second head image of the copilot.

The controller is configured for acquiring the first head image and the second head image, determining an area of overlapping between the first head image and the second head image, and if the area of overlapping is greater than an area threshold, determining that the sight line is blocked.

In the embodiments of the present application, after the first camera has collected the first head image and the second head image, the controller may acquire the first head image and the second head image from the first camera, according to the first head image and the second head image, determine the area of overlapping between the first head image and the second head image, determine whether the area of overlapping is greater than an area threshold, and, if it has been determined that the area of overlapping is greater than the area threshold, determine that the sight line with which the driving person watches the first display screen is blocked.

In combination with the above embodiments, an embodiment of the present application provides a content displaying system. In the content displaying system, the first camera is under the first display screen and on the right side of the first display screen. When the driving person is watching the first display screen, if the sight line is blocked, the blocking must be from the right side to the left side. In this case, in order to ensure that the driving person can see the right side, because the first camera is installed on the right side, when the right side is blocked, that can be detected by using the image collected by the first camera.

In combination with the above embodiments, an embodiment of the present application provides a content displaying system. In the content displaying system, a second camera is integrated under the second display screen.

The second camera is configured for collecting a second driving-person image.

In the embodiments of the present application, the second camera of the second display screen can cover the area of the primary-driving-person seat, and may collect the real-time image of the primary driving person, so as to collect to obtain the second driving-person image of the driving person.

The controller is configured for, according to the second driving-person image, detecting whether a driving-person state satisfies a second predetermined condition.

In the embodiments of the present application, after the second camera has collected the second driving-person image, the controller may acquire the second driving-person image from the second camera, and according to the second driving-person image, detect whether the driving-person state satisfies the second predetermined condition.

In an embodiment, the image information of the driving person watching the left and right rear view mirrors may be collected in advance by using the second camera, and the image information is inputted into a neural network, for the identification on the act of the driving person turning the head and watching the left and right rear view mirrors. Accordingly, the controller may acquire the second driving-person image from the second camera, and may input the second driving-person image into a neural network model that has been completely trained, so as to identify to obtain whether the driving person is turning the head and watching the rear view mirrors, thereby detecting whether the driving-person state satisfies the second predetermined condition.

In combination with the above embodiments, in an alternative embodiment, in the content displaying system, the second display screen comprises at least one of a master-control screen, a dashboard and a copilot screen.

In combination with the above embodiments, in an alternative embodiment, in the content displaying system, the first display screen is a rear-view-mirror display screen.

In an embodiment of the present application, in order to solve the problem of the current intelligent-cabin multi-screen displaying of a high screen quantity and a high hardware cost, an embodiment of the present application provides a content displaying method. Referring to FIG. 25, FIG. 25 shows a flow chart of a content displaying method according to an embodiment of the present application. The content displaying method according to the embodiments of the present application may be applied in a controller, and the controller may perform relevant controlling over the vehicle-mounted terminals and the inside-vehicle component elements.

Generally, the electronic rear view mirror comprises cameras and display screens. For example, the vehicle-body outer-side camera on the right side of the vehicle corresponds to the right rear view screen, and the vehicle-body outer-side camera on the left side of the vehicle corresponds to a left rear view screen. In the embodiments of the present application, if the left and right rear view screens are removed, the corresponding target content can still be displayed according to the driving situation of the driving person. The content displaying method may comprise the following steps:
S2101: detecting whether a current sight line of a driving person is a sight line that watches an exterior of a vehicle.

In the embodiments of the present application, during the travelling of the vehicle, the inside-vehicle display screens display the respective corresponding relevant driving data, and, in a normal situation, they do not display the vehicle-exterior information, i.e., the image data collected by the left and right outside-vehicle cameras. The controller may detect the current sight line of the driving person, and detect whether the current sight line is a sight line that watches the exterior of the vehicle. As an example, optionally, a camera is integrated under an inside-vehicle display screen, the under-screen camera of the inside-vehicle display screen performs real-time collection of a driving-person image, and the controller detects based on the driving-person image acquired in real time by the under-screen camera of the inside-vehicle display screen, to determine whether the current sight line of the driving person is a sight line that watches the exterior of the vehicle.

S2102: if it has been detected that the current sight line of the driving person is a sight line that watches the exterior of the vehicle, determining an inside-vehicle display screen.

In the embodiments of the present application, the controller, if it has been detected that the current sight line of the driving person is a sight line that watches the exterior of the vehicle, may determine the inside-vehicle display screen that is required to display the vehicle-exterior information. The determined inside-vehicle display screen may be any one or more display screens inside the vehicle, which is not limited in the present embodiment.

S2103: controlling the inside-vehicle display screen to display vehicle-exterior information.

In the embodiments of the present application, after the inside-vehicle display screen that is required to display the vehicle-exterior information has been determined, that inside-vehicle display screen may be controlled to display the vehicle-exterior information, whereby, only when the intention of the driving person of watching the exterior of the vehicle has been detected, the inside-vehicle display screen displays the vehicle-exterior information.

In combination with the above embodiments, an embodiment of the present application provides a content displaying method. The content displaying method, besides the above steps, may further comprise the step S2201, and the step S2103 may particularly comprise the step S2202:
S2201: if it has been detected that the current sight line of the driving person is a sight line that watches the exterior of the vehicle, determining a displaying mode of the inside-vehicle display screen.

In the embodiments of the present application, the controller, if it has been detected that the current sight line of the driving person is a sight line that watches the exterior of the vehicle, does not only determine the inside-vehicle display screen that is required to display the vehicle-exterior information, but also may determine the displaying mode of that inside-vehicle display screen. The displaying mode may include a first displaying mode or a second displaying mode. The first displaying mode refers to a displaying mode in which the information that the inside-vehicle display screen has already displayed is hidden and the vehicle-exterior information is displayed. The second displaying mode refers to a displaying mode in which the vehicle-exterior information and part of the information that the inside-vehicle display screen has already displayed are displayed.

S2202: controlling the inside-vehicle display screen to display the vehicle-exterior information in the displaying mode.

In the embodiments of the present application, after the inside-vehicle display screen and the displaying mode of the inside-vehicle display screen have been determined, that inside-vehicle display screen may be controlled to display the vehicle-exterior information in the determined displaying mode.

It should be noted that, in the present embodiment, optionally, the step S2102 may be executed firstly and the step S2201 may be executed subsequently. Optionally, the step S2201 may be executed firstly and the step S2102 may be executed subsequently. Optionally, the step S2102 and the step S2201 may be executed simultaneously. The sequence of the execution of the step S2201 and the step S2102 is not limited in any manner in the present embodiment.

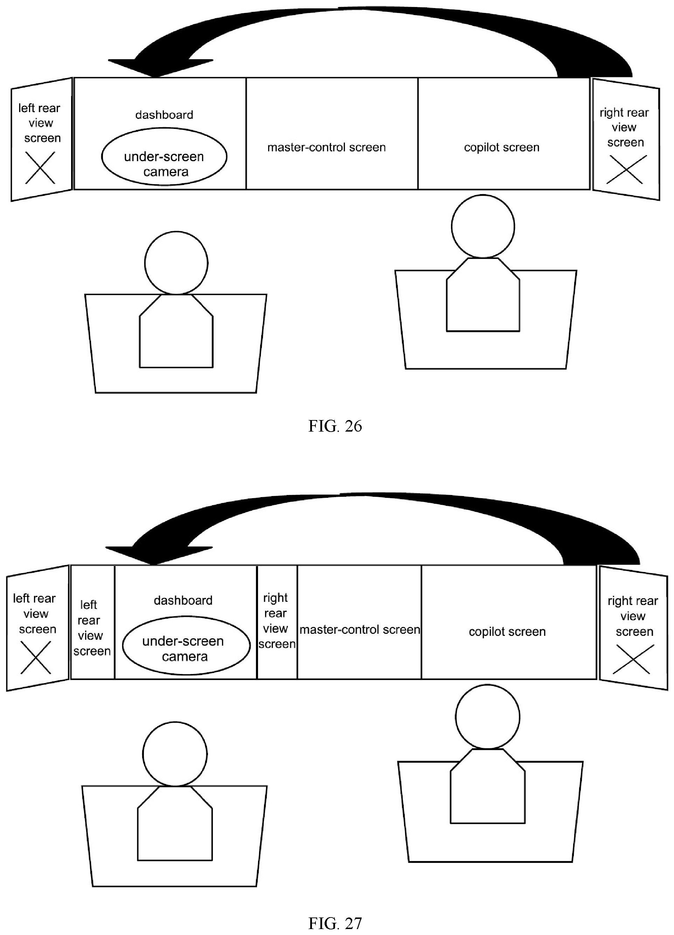

As an example, as shown in FIG. 26, FIG. 26 is a schematic diagram of a content displaying method according to an embodiment of the present application. In FIG. 26, the inside-vehicle display screen is the dashboard. The controller, if it has been detected that the current sight line of the driving person is a sight line that watches the exterior of the vehicle, may control to display the vehicle-exterior information collected by the left and right rear view cameras in the inside-vehicle display screen in a first displaying mode (the dashboard information is hidden, and the dashboard displays the vehicle-exterior information collected by the left and right rear view cameras) or a second displaying mode (merely the speed and the main data among the dashboard information are displayed, i.e., shrinking the dashboard information, and the dashboard displays the vehicle-exterior information collected by the left and right rear view cameras).

In combination with any one of the above embodiments, an embodiment of the present application provides a content displaying method. The method, besides the above steps, may further comprise the following step:
S2301: if it has been detected that the current sight line of the driving person is not a sight line that watches the exterior of the vehicle, controlling the inside-vehicle display screen not to display the vehicle-exterior information.

In the embodiments of the present application, after the controller has detected that the current sight line of the driving person is a sight line that watches the exterior of the vehicle, the controller continues performing in real time the detection on the current sight line of the driving person. The controller, if it has been detected that the current sight line of the driving person is not a sight line that watches the exterior of the vehicle, may control the inside-vehicle display screen not to display the vehicle-exterior information, so that the inside-vehicle display screen can continue to display the content that was displayed correspondingly before the inside-vehicle display screen displays the vehicle-exterior information. For example, if the inside-vehicle display screen is the dashboard, if the controller has detected that the current sight line of the driving person is not a sight line that watches the exterior of the vehicle, the inside-vehicle display screen may continue to display the dashboard information.

As an example, as shown in FIG. 27, FIG. 27 is a schematic diagram of a content displaying method according to an embodiment of the present application. In FIG. 27, the inside-vehicle display screen is the dashboard. The controller, if it has been detected that the current sight line of the driving person is a sight line that watches the exterior of the vehicle, may control to display the vehicle-exterior information collected by the left and right rear view cameras on the two sides of the dashboard in a first displaying mode (the dashboard information is hidden, and the dashboard displays the vehicle-exterior information collected by the left and right rear view cameras) or a second displaying mode (merely the speed and the main data among the dashboard information are displayed, i.e., shrinking the dashboard information, and the dashboard displays the vehicle-exterior information collected by the left and right rear view cameras). For example, the right side of the dashboard displays the vehicle-exterior information collected by the right rear view camera, and the left side of the dashboard displays the vehicle-exterior information collected by the left rear view camera.

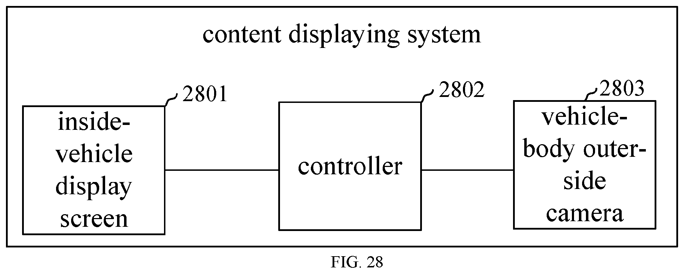

On the basis of the same inventive concept, an embodiment of the present application provides a content displaying system. Referring to FIG. 28, FIG. 28 is a schematic diagram of a content displaying system according to an embodiment of the present application. The content displaying system comprises at least an inside-vehicle display screen 2801, a controller 2802 and a vehicle-body outer-side camera 2803.

The vehicle-body outer-side camera 2803 is configured for performing image collection to the outer side of the vehicle body.

The controller 2802 is configured for:
detecting whether a current sight line of a driving person is a sight line that watches an exterior of a vehicle;
if it has been detected that the current sight line of the driving person is a sight line that watches the exterior of the vehicle, determining the inside-vehicle display screen 2801; and
controlling the inside-vehicle display screen 2801 to display vehicle-exterior information, wherein the vehicle-exterior information is image information collected by the vehicle-body outer-side camera 2803.

In combination with the above embodiments, an embodiment of the present application provides a content displaying system. In the content displaying system, a third camera is integrated under the inside-vehicle display screen.

The third camera is configured for collecting a third driving-person image.

In the embodiments of the present application, the third camera of the inside-vehicle display screen can cover the area of the primary-driving-person seat, and may collect the real-time image of the primary driving person, so as to collect to obtain the third driving-person image of the driving person.

The controller is configured for acquiring the third driving-person image, and according to the third driving-person image, detecting whether the current sight line of the driving person is a sight line that watches the exterior of the vehicle.

In the embodiments of the present application, after the third camera has collected the third driving-person image, the controller may acquire the third driving-person image from the third camera, and, according to the third driving-person image, sense adjustment of the head and the eyes of the driving person, detect whether the current sight line of the driving person is a sight line that watches the exterior of the vehicle.

In combination with the above embodiments, in an alternative embodiment, in the content displaying system, the inside-vehicle display screen comprises at least one of a master-control screen, a dashboard and a copilot screen.

Regarding the system embodiments, because they are substantially similar to the process embodiments, they are described simply, and the related parts may refer to the description on the process embodiments.

On the basis of the same inventive concept, an embodiment of the present application provides an electronic device, wherein the electronic device comprises a memory, a processor and a computer program that is stored in the memory and is executable in the processor, and the processor, when executing the computer program, implements the steps of the content displaying method according to any one of the above embodiments.

On the basis of the same inventive concept, an embodiment of the present application provides a vehicle, wherein the vehicle comprises a controller, and the controller is configured for implementing the steps of the content displaying method according to any one of the above embodiments.

The embodiments of the description are described in the mode of progression, each of the embodiments emphatically describes the differences from the other embodiments, and the same or similar parts of the embodiments may refer to each other.

A person skilled in the art should understand that the embodiments of the present application may be provided as a method, a device, or a computer program product. Therefore, the embodiments of the present application may take the form of a complete hardware embodiment, a complete software embodiment, or an embodiment combining software and hardware. Furthermore, the embodiments of the present application may take the form of a computer program product implemented on one or more computer-usable storage media (including but not limited to a disk storage, a CD-ROM, an optical memory and so on) containing a computer-usable program code therein.

The embodiments of the present application are described with reference to the flow charts and/or block diagrams of the method, the terminal device (system), and the computer program product according to the embodiments of the present application. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable image processing terminal device to generate a machine, so that a device for implementing the functions specified in one or more flows of the flow charts and/or one or more blocks of the block diagrams can be generated by instructions executed by the processor of the computers or the other programmable image processing terminal device.

The computer program instructions may also be stored in a computer-readable memory that can instruct the computers or the other programmable image processing terminal device to operate in a specific mode, so that the instructions stored in the computer-readable memory generate an article comprising an instruction device, wherein the instruction device implements the functions specified in one or more flows of the flow charts and/or one or more blocks of the block diagrams.

The computer program instructions may also be loaded to the computers or the other programmable image processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

Although preferable embodiments of the embodiments of the present application have been described, once a person skilled in the art has known the essential inventive concept, he may make further variations and modifications on those embodiments. Therefore, the appended claims are intended to be interpreted as including the preferable embodiments and all of the variations and modifications that fall within the scope of the embodiments of the present application.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

The content displaying method, the content displaying system, the vehicle and the electronic device according to the present application have been described in detail above. The principle and the embodiments of the present application are described herein with reference to the particular examples, and the description of the above embodiments is merely intended to facilitate to comprehend the method according to the present application and its core concept. Moreover, for a person skilled in the art, according to the concept of the present application, the particular embodiments and the range of application may be varied. In conclusion, the contents of the description should not be comprehended as limiting the present application.

## Claims

1. A content displaying method, wherein the method comprises:
detecting whether a sight line with which a driving person watches a first display screen is blocked, wherein the first display screen is located on a right side of the driving person;
if it has been detected that the sight line with which the driving person watches the first display screen is blocked, determining a second display screen associated with the first display screen; and
controlling the second display screen to display a content of the first display screen.

2. The content displaying method according to claim 1, wherein the method further comprises:
controlling the second display screen to perform angle adjustment.

3. The content displaying method according to claim 2, wherein the step of controlling the second display screen to perform the angle adjustment comprises at least one of:
controlling the second display screen to turn leftwardly by a preset angle; and
controlling a sum of an angle of the second display screen and an angle of the first display screen to be 180 degrees.

4. The content displaying method according to claim 1, wherein the method further comprises:
according to a displaying parameter value of the first display screen, adjusting a displaying parameter value of the second display screen.

5. The content displaying method according to claim 4, wherein the step of, according to the displaying parameter value of the first display screen, adjusting the displaying parameter value of the second display screen comprises at least one or more of:
according to a brightness value of the first display screen, controlling a brightness value of the second display screen;
according to a length-width ratio of the first display screen, controlling a length-width ratio of the second display screen; and
according to a refresh rate of the first display screen, controlling a refresh rate of the second display screen.

6. The content displaying method according to claim 1, wherein the method further comprises:
if it has been detected that the sight line with which the driving person watches the first display screen is blocked, determining a blocking degree with which the sight line is blocked, wherein the blocking degree is for characterizing a state in which a visual-field area of the sight line is blocked; and
the step of, if it has been detected that the sight line with which the driving person watches the first display screen is blocked, determining the second display screen associated with the first display screen comprises:
if the blocking degree exceeds a first blocking-degree threshold, determining the second display screen to be a third display screen; and
if the blocking degree exceeds a second blocking-degree threshold, determining the second display screen to be a fourth display screen, wherein the second blocking-degree threshold is greater than the first blocking-degree threshold, and the fourth display screen is a display screen that is closer to the driving person than the third display screen is.

7. The content displaying method according to claim 1, wherein the method further comprises:
if it has been detected that the sight line with which the driving person watches the first display screen is blocked, determining a blocking degree with which the sight line is blocked, wherein the blocking degree is for characterizing a state in which a visual-field area of the sight line is blocked; and
the step of controlling the second display screen to display the content of the first display screen comprises:
if the blocking degree exceeds a third blocking-degree threshold, controlling a first displaying region of the second display screen to display the content of the first display screen; and
if the blocking degree exceeds a fourth blocking-degree threshold, controlling a second displaying region of the second display screen to display the content of the first display screen, wherein the third blocking-degree threshold is greater than the fourth blocking-degree threshold, and the first displaying region is a displaying region that is closer to the driving person than the second displaying region is.

8. The content displaying method according to claim 1, wherein if it has been detected that the sight line with which the driving person watches the first display screen is blocked, the method further comprises:
determining a blocking duration for which the sight line is blocked, and/or determining a blocking time quantity with which the sight line is blocked; and
if the blocking duration exceeds a duration threshold and/or the blocking time quantity exceeds a time-quantity threshold, determining that it is required to, by using the second display screen, display the content of the first display screen; and
the step of determining the second display screen associated with the first display screen comprises:
if it has been determined that it is required to, by using the second display screen, display the content of the first display screen, executing the step of determining the second display screen associated with the first display screen.

9. The content displaying method according to any one of claims 1-8, wherein the step of detecting whether the sight line with which the driving person watches the first display screen is blocked comprises:
acquiring a first driving-person image collected with respect to the driving person;
according to the first driving-person image, detecting whether a target site of the driving person is blocked; and
if the target site is blocked, determining that the sight line is blocked.

10. The content displaying method according to any one of claims 1-8, wherein the step of detecting whether the sight line with which the driving person watches the first display screen is blocked comprises:
acquiring a first head image of the driving person, and acquiring a second head image of a copilot;
determining an area of overlapping between the first head image and the second head image; and
if the area of overlapping is greater than an area threshold, determining that the sight line is blocked.

11. The content displaying method according to any one of claims 1-8, wherein the step of detecting whether the sight line with which the driving person watches the first display screen is blocked comprises:
determining a distance between a copilot and a copilot screen; and
if the distance is less than a distance threshold, determining that the sight line is blocked.

12. The content displaying method according to any one of claims 1-8, wherein the step of detecting whether the sight line with which the driving person watches the first display screen is blocked comprises:
determining whether a copilot is operating a copilot screen; and
if the copilot is operating the copilot screen, determining that the sight line is blocked.

13. The content displaying method according to any one of claims 1-8, wherein the step of detecting whether the sight line with which the driving person watches the first display screen is blocked comprises:
acquiring a position of a driving-person seat and a position of a copilot seat;
determining an included angle between a connecting line between the driving-person seat and the copilot seat and a horizontal direction of a vehicle body; and
if the included angle is greater than an angle threshold, determining that the sight line is blocked.

14. The content displaying method according to any one of claims 1-8, wherein the method further comprises:
detecting whether a target event has happened; and
if it has been detected that the target event has happened, executing the step of detecting whether the sight line with which the driving person watches the first display screen is blocked, wherein that the target event has happened includes at least one of that a vehicle state satisfies a first predetermined condition and that a driving-person state satisfies a second predetermined condition.

15. The content displaying method according to any one of claims 1-8, wherein the method further comprises:
if it has been detected that the target event has happened, controlling the second display screen to display the content of the first display screen, wherein that the target event has happened includes at least one of that a vehicle state satisfies a first predetermined condition and that a driving-person state satisfies a second predetermined condition.

16. A content displaying system, wherein the content displaying system comprises at least a first display screen, a second display screen, a controller and a vehicle-body outer-side camera;
the vehicle-body outer-side camera is configured for performing image collection to an outer side of a vehicle body; and
the controller is configured for:
detecting whether a sight line with which a driving person watches the first display screen is blocked, wherein the first display screen is located on a right side of the driving person;
if it has been detected that the sight line with which the driving person watches the first display screen is blocked, determining the second display screen associated with the first display screen; and
controlling the second display screen to display a content of the first display screen, wherein the content of the first display screen is a content of an image collected by the vehicle-body outer-side camera.

17. The content displaying system according to claim 16, wherein a first camera is integrated under the first display screen;
the first camera is configured for collecting a first driving-person image; and
the controller is configured for acquiring the first driving-person image, according to the first driving-person image, detecting whether a target site of the driving person is blocked, and if the target site is blocked, determining that the sight line is blocked.

18. The content displaying system according to claim 16, wherein a first camera is integrated under the first display screen;
the first camera is configured for collecting a first head image of the driving person and a second head image of a copilot; and
the controller is configured for acquiring the first head image and the second head image, determining an area of overlapping between the first head image and the second head image, and if the area of overlapping is greater than an area threshold, determining that the sight line is blocked.

19. The content displaying system according to claim 17, wherein the first camera is under the first display screen and on a right side of the first display screen.

20. The content displaying system according to claim 16, wherein a second camera is integrated under the second display screen;
the second camera is configured for collecting a second driving-person image; and
the controller is configured for, according to the second driving-person image, detecting whether a driving-person state satisfies a second predetermined condition.

21. The content displaying system according to any one of claims 16-20, wherein the second display screen comprises at least one of a master-control screen, a dashboard and a copilot screen.

22. The content displaying system according to any one of claims 16-20, wherein the first display screen is a rear-view-mirror display screen.

23. A content displaying method, wherein the method comprises:
detecting whether a current sight line of a driving person is a sight line that watches an exterior of a vehicle;
if it has been detected that the current sight line of the driving person is a sight line that watches the exterior of the vehicle, determining an inside-vehicle display screen; and
controlling the inside-vehicle display screen to display vehicle-exterior information.

24. The content displaying method according to claim 23, wherein the method further comprises:
if it has been detected that the current sight line of the driving person is a sight line that watches the exterior of the vehicle, determining a displaying mode of the inside-vehicle display screen; and
the step of controlling the inside-vehicle display screen to display the vehicle-exterior information comprises:
controlling the inside-vehicle display screen to display the vehicle-exterior information in the displaying mode;
wherein the displaying mode includes a first displaying mode or a second displaying mode;
the first displaying mode refers to a displaying mode in which information that the inside-vehicle display screen has already displayed is hidden and the vehicle-exterior information is displayed; and
the second displaying mode refers to a displaying mode in which the vehicle-exterior information and part of information that the inside-vehicle display screen has already displayed are displayed.

25. The content displaying method according to claim 23 or 24, wherein the method further comprises:
if it has been detected that the current sight line of the driving person is not a sight line that watches the exterior of the vehicle, controlling the inside-vehicle display screen not to display the vehicle-exterior information.

26. A content displaying system, wherein the content displaying system comprises at least an inside-vehicle display screen, a controller and a vehicle-body outer-side camera;
the vehicle-body outer-side camera is configured for performing image collection to an outer side of a vehicle body; and
the controller is configured for:
detecting whether a current sight line of a driving person is a sight line that watches an exterior of a vehicle;
if it has been detected that the current sight line of the driving person is a sight line that watches the exterior of the vehicle, determining the inside-vehicle display screen; and
controlling the inside-vehicle display screen to display vehicle-exterior information, wherein the vehicle-exterior information is image information collected by the vehicle-body outer-side camera.

27. The content displaying system according to claim 26, wherein a third camera is integrated under the inside-vehicle display screen;
the third camera is configured for collecting a third driving-person image; and
the controller is configured for acquiring the third driving-person image, and according to the third driving-person image, detecting whether the current sight line of the driving person is a sight line that watches the exterior of the vehicle.

28. The content displaying system according to claim 26 or 27, wherein the inside-vehicle display screen comprises at least one of a master-control screen, a dashboard and a copilot screen.

29. A vehicle, wherein the vehicle comprises a controller, and the controller is configured for implementing the steps of the content displaying method according to any one of claims 1-15 or configured for implementing the steps of the content displaying method according to any one of claims 23-25.

30. An electronic device, wherein the electronic device comprises a processor and a memory, the memory stores a program or instruction executable in the processor, and the program or instruction, when executed by the processor, implements the steps of the content displaying method according to any one of claims 1-15 or implements the steps of the content displaying method according to any one of claims 23-25.
